# EUROPEAN PATENT APPLICATION

(11) **EP 4 614 023 A1**
(43) Date of publication of application: **10.09.2025**
(21) Application number: 24856214.2
(22) Date of filing: 25.07.2024
(51) Int. Cl.: F16D 13/52, F16D 43/08, F16D 43/10

(54) **CLUTCH DEVICE**

(30) Priority: 23.08.2023 JP 2023135859; 21.05.2024 JP 2024082648
(71) Applicant: Kabushiki Kaisha F.C.C., Hamamatsu-shi, Shizuoka 431-1394 (JP)
(72) Inventor: KOBAYASHI, Yuki, Hamamatsu-shi, Shizuoka 431-1394 (JP); CHEN, Han Hiong, Hamamatsu-shi, Shizuoka 431-1394 (JP)
(74) Representative: Grünecker Patent- und Rechtsanwälte PartG mbB
(86) International application number: PCT/JP2024/026632
(87) International publication number: WO 2025/041521

(57) **Abstract**

A centrifugal clutch mechanism 120 of a clutch device 10 includes a holding member 124 holding weight members 122 such that the weight members 122 are movable between radially inward positions and radially outward positions, springs 135 urging the weight members 122 in a radially inward direction, a pressure-contact member 126 movable in an axial direction of an output shaft 15, by the movement of the weight members 122 from the radially inward positions to the radially output positions, to put input-side rotating plates 20 and output-side rotating plates 22 into pressure contact with each other, and urging members 140 located between the holding member 124 and the pressure-contact member 126 in the axial direction of the output shaft 15, the urging members 140 urging the weight members 122 held by the holding member 124 in the axial direction of the output shaft 125 and permitting the weight members 122 to move in a radial direction.

## Description

### Technical Field

The present invention relates to a clutch device.

### Background Art

A straddled vehicle such as a motorcycle or the like includes a clutch device capable of allowing or blocking transfer of a rotation driving force of a motive power source such as an engine or the like to a drive wheel. For example, Patent Literature 1 discloses a clutch device including an input member (hereinafter, referred to as an "input shaft") coupled to the side of the engine, an output member (hereinafter, referred to as an "output shaft") coupled to the side of the drive wheel, a clutch member (hereinafter, referred to as a "clutch center") coupled with the output shaft, and a pressure member movable toward, or away from, the clutch center.

The clutch device described in Patent Literature 1 also includes a centrifugal clutch mechanism including weight members movable in a radial direction. The weight members move from radially inward positions to radially outward positions by a centrifugal force caused by a rotation of a clutch housing to put drive-side clutch plates (hereinafter, referred to as "input-side rotating plates") and driven-side clutch plates (hereinafter, referred to as "output-side rotating plates") into pressure contact with each other, and thus transfer the driving force of the engine to a wheel.

### Citation List

### Patent Literature

Patent Literature 1: Japanese Patent Application Publication No. 2022-30211

### Summary of Invention

### Technical Problem

The centrifugal clutch mechanism includes a holding member and a pressure-contact member arranged in an axial direction of the output shaft. The holding member holds the weight members such that the weight members are movable in the radial direction. The pressure-contact member is configured to put the input-side rotating plates and the output-side rotating plates into pressure contact with each other along with the movement of the weight members in the radial direction. The weight members are urged inward in the radial direction by springs provided in the holding member. In the axial direction of the output shaft, there is a space between the weight members and the holding member and also between the weight members and the pressure-contact member. Therefore, the weight members may vibrate in the axial direction of the output shaft by a vibration of the engine or the like. When the clutch housing is rotated in a state where the weight members are vibrating in the axial direction of the output shaft, it may occur that a thrust in the axial direction of the output shaft generated in the weight members by a centrifugal force caused by the rotation of the clutch housing is not transferred effectively to the pressure-contact member.

The present invention, made in light of the above-described point, has an object of providing a clutch device capable of effectively transferring the thrust in the axial direction of the output shaft, generated in the weight members by the centrifugal force, to the pressure-contact member.

### Solution to Problem

A clutch device according to the present invention is a clutch device allowing or blocking transfer of a rotation driving force of an input shaft to an output shaft. The clutch device includes a clutch center housed in a clutch housing holding a plurality of input-side rotating plates rotationally drivable by rotational driving of the input shaft, the clutch center being rotationally drivable together with the output shaft; a pressure member movable toward, or away from, the clutch center, the pressure member capable of pressing the input-side rotating plates and the output-side rotating plates alternately arranged with the input-side rotating plates; and a centrifugal clutch mechanism including a plurality of weight members configured to be movable from radially inward positions to radially outward positions by a centrifugal force caused by the rotation of the clutch housing; when the weight members are at the radially outward positions, the centrifugal clutch mechanism putting the input-side rotating plates and the output-side rotating plates into pressure contact with each other to provide a state where the transfer of the rotation driving force of the input shaft to the output shaft is allowed; and when the weight members are at the radially inward positions, the centrifugal clutch mechanism releasing the input-side rotating plates and the output-side rotating plates from a contact pressure force to provide a state where the transfer of the rotation driving force of the input shaft to the output shaft is blockable. The centrifugal clutch mechanism includes a holding member holding the weight members such that the weight members are movable between the radially inward positions and the radially outward positions, an elastic member urging the weight members in a radially inward direction, a pressure-contact member movable in an axial direction of the output shaft, by the movement of the weight members from the radially inward positions to the radially output positions, to put the input-side rotating plates and the output-side rotating plates into pressure contact with each other, and urging members located between the holding member and the pressure-contact member in the axial direction of the output shaft, the urging members urging the weight members held by the holding member in the axial direction of the output shaft and permitting the weight members to move in a radial direction.

According to the clutch device of the present invention, the urging members of the centrifugal clutch mechanism are located between the holding member and the pressure-contact member in the axial direction of the output shaft, and urge the weight members held by the holding member in the axial direction of the output shaft and permit the weight members to move in the radial direction. According to the above-described embodiment, the weight members are urged in the axial direction of the output shaft by the urging members. Therefore, even though the engine or the like vibrates, the vibration of the weight members in the axial direction of the output shaft is suppressed. As a result, the weight members move smoothly in the radial direction. Therefore, the thrust in the axial direction of the output shaft, generated in the weight members by the centrifugal force caused by the rotation of the clutch housing, is effectively transferred to the pressure-contact member.

### Advantageous Effects of invention

According to the present invention, a clutch device capable of effectively transferring the thrust in the axial direction of the output shaft, generated in the weight members by the centrifugal force, to the pressure-contact member is provided.

### Brief Description of Drawings

FIG. 1 is a cross-sectional view of a clutch device according to embodiment 1.
FIG. 2 is a perspective view of a first clutch center according to embodiment 1.
FIG. 3 is a perspective view of the first clutch center according to embodiment 1.
FIG. 4 is a perspective view of a second clutch center according to embodiment 1.
FIG. 5 is a plan view of the second clutch center according to embodiment 1.
FIG. 6 is a perspective view of a pressure member according to embodiment 1.
FIG. 7 is a perspective view of a first pressure member according to embodiment 1.
FIG. 8 is a perspective view of the first pressure member according to embodiment 1.
FIG. 9 is a perspective view of a second pressure member according to embodiment 1.
FIG. 10 is a perspective view of the second pressure member according to embodiment 1.
FIG. 11A is a schematic view illustrating effects of a center-side assist cam surface and a pressure-side assist cam surface.
FIG. 11B is a schematic view illustrating effects of a center-side slipper cam surface and a pressure-side slipper cam surface.
FIG. 12 is a perspective view of a centrifugal clutch mechanism according to embodiment 1.
FIG. 13 is a cross-sectional view of the centrifugal clutch mechanism according to embodiment 1.
FIG. 14 is a perspective view showing the centrifugal clutch mechanism according to embodiment 1 in a state where a pressure-contact member is detached therefrom.
FIG. 15 is a perspective view showing the centrifugal clutch mechanism according to embodiment 1 in a state where the pressure-contact member and a guide member are detached therefrom.
FIG. 16 is a plan view showing the centrifugal clutch mechanism according to embodiment 1 in a state where the pressure-contact member and the guide member are detached therefrom.
FIG. 17 is a perspective view of an urging member of the centrifugal clutch mechanism according to embodiment 1.
FIG. 18 is a plan view of a portion of a centrifugal clutch mechanism according to embodiment 2, showing a state where weight members are located at radially inward positions.
FIG. 19 is a perspective view of a weight member according to embodiment 2.
FIG. 20 is a plan view of the weight member according to embodiment 2.
FIG. 21 is a perspective view of the weight member according to embodiment 2.
FIG. 22 is a bottom view of the weight member according to embodiment 2.
FIG. 23 is a side view of the weight member according to embodiment 2.
FIG. 24 is a plan view of a portion of a centrifugal clutch mechanism according to embodiment 3, showing a state where weight members are located at radially inward positions.
FIG. 25 is a perspective view of a weight member according to embodiment 3.
FIG. 26 is a bottom view of the weight member according to embodiment 3.
FIG. 27 is a side view of the weight member according to embodiment 3.
FIG. 28A is a perspective view of a configuration of an urging member and the vicinity thereof according to embodiment 4.
FIG. 28B is a cross-sectional view of the configuration of the urging member and the vicinity thereof according to embodiment 4.
FIG. 29A is a perspective view of a configuration of an urging member and the vicinity thereof according to embodiment 5.
FIG. 29B is a cross-sectional view of the configuration of the urging member and the vicinity thereof according to embodiment 5.

### Description of Embodiments

Hereinafter, embodiments of a clutch device according to the present invention will be described with reference to the drawings. The embodiments described herein are, of course, not intended to particularly limit the present invention. Elements and portions having the same functions are denoted by the same reference signs, and description for the same elements and portions will be omitted or simplified as appropriate.

### <Embodiment 1>

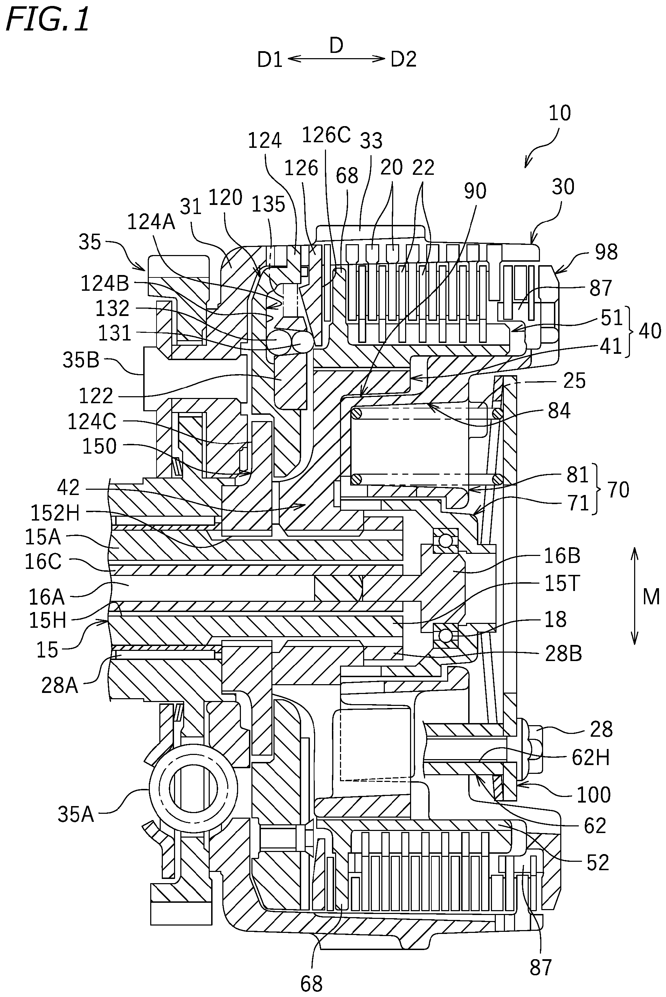

FIG. 1 is a cross-sectional view of a clutch device 10 according to this embodiment. The clutch device 10 is provided in, for example, a straddled vehicle such as a motorcycle or the like. The clutch device 10, for example, allows or blocks transfer of a rotation driving force of an input shaft (crankshaft) of an engine, which is a motive power source of the motorcycle, to an output shaft 15. The clutch device 10 allows or blocks transfer of the rotation driving force of the input shaft to a drive wheel (rear wheel) through the output shaft 15. The clutch device 10 is located between the engine and a transmission.

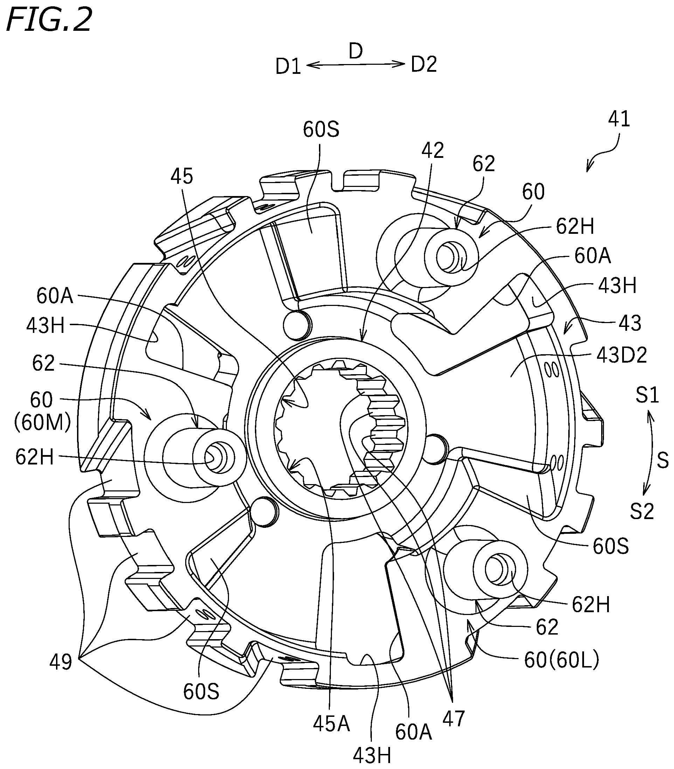

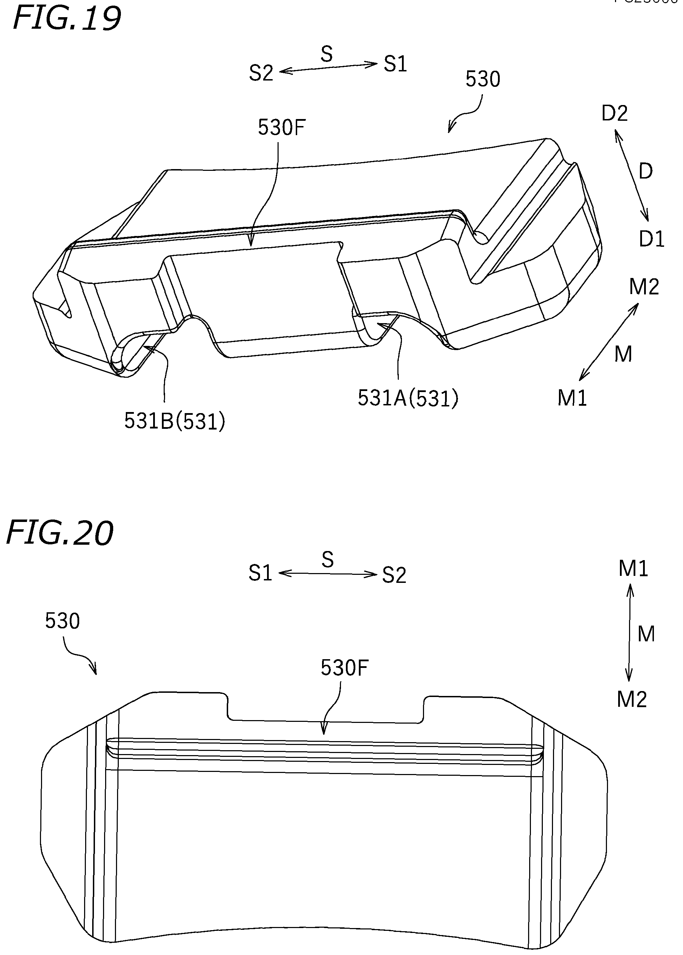

In the following description, a direction in which a pressure member 70 of the clutch device 10 moves toward, and away from, a clutch center 40 will be referred to as a direction D. A direction in which the pressure member 70 moves toward the clutch center 40 will be referred to as a first direction D1, and a direction in which the pressure member 70 moves away from the clutch center 40 will be referred to as a second direction D2. A circumferential direction (i.e., a rotation direction) of the clutch center 40 and the pressure member 70 will be referred to as a circumferential direction S. Regarding the circumferential direction S, a direction from one center-side cam portion 60 toward another center-side cam portion 60 (a direction from one pressure-side cam portion 90 toward another pressure-side cam portion 90) will be referred to as a first circumferential direction S1 (see FIG. 2), and a direction from the other center-side cam portion 60 toward the one center-side cam portion 60 (a direction from the other pressure-side cam portion 90 toward the one pressure-side cam portion 90) will be referred to as a second circumferential direction S2 (see FIG. 2). A radial direction of the output shaft 15 will be referred to as a radial direction M. A direction away from the output shaft 15 will be referred to as an outward direction M1 (see FIG. 20), and a direction toward the output shaft 15 will be referred to as an inward direction M2 (see FIG. 20). In this embodiment, the axial direction of the output shaft 15 is the same as the direction D. The pressure member 70 and the clutch center 40 rotate in the first circumferential direction S1 (i.e., a direction from a center-side assist cam surface 60A toward a center-side slipper cam surface 60S of one center-side cam portion 60). It should be noted that the directions described above are defined simply for the convenience of description, and are not intended to limit the state of installation of the clutch device 10 in any way, or to limit the present invention in any way.

As shown in FIG. 1, the clutch device 10 includes the output shaft 15, a plurality of input-side rotating plates 20, a plurality of output-side rotating plates 22, a clutch housing 30, the clutch center 40, the pressure member 70, stopper plates 100, a centrifugal clutch mechanism 120, and an assisting clutch plate 150.

As shown in FIG. 1, the output shaft 15 is a hollow shaft. One of ends of the output shaft 15 supports an input gear 35 described below and the clutch housing 30 via a needle bearing 28A such that the input gear 35 and the clutch housing 30 are rotatable. The output shaft 15 supports the clutch center 40 via a nut 28B such that the clutch center 40 is secured. That is, the output shaft 15 rotates integrally with the clutch center 40. The other of the ends of the output shaft 15 is coupled with, for example, a transmission (not shown) of a motorcycle.

As shown in FIG. 1, the output shaft 15 includes a body 15A extending in the direction D. The body 15A has an oil flow path 15H formed therein, through which clutch oil flows. The oil flow path 15H is formed between a sleeve 16C outserted over a push rod 16A described below and the body 15A. The clutch oil flows in the output shaft 15, that is, in the oil flow path 15H of the body 15A.

As shown in FIG. 1, the push rod 16A and a push member 16B adjacent to the push rod 16A are provided in the oil flow path 15H of the output shaft 15. The push rod 16A and the push member 16B are provided to be slidable in the sleeve 16C. The push rod 16A has one end thereof (left end in the figure) coupled with a clutch operation lever (not shown) of the motorcycle, and slides in the sleeve 16C by an operation made on the clutch operation lever to press the push member 16B in the second direction D2. A portion of the push member 16B protrudes outward of the output shaft 15 (in this embodiment, in the second direction D2), and is coupled with a release bearing 18 provided on the pressure member 70. The sleeve 16C and the push member 16B each have a diameter shorter than an inner diameter of the body 15A, so that the clutch oil is guaranteed to flow easily in the oil flow path 15H.

The clutch housing 30 is molded by die-cast with aluminum. The clutch housing 30 has a bottomed cylindrical shape. As shown in FIG. 1, the clutch housing 30 includes a bottom wall 31 having a generally circular shape and a side wall 33 extending in the second direction D2 from an edge of the bottom wall 31. The clutch housing 30 holds the plurality of input-side rotating plates 20.

As shown in FIG. 1, the input gear 35 is provided on the bottom wall 31 of the clutch housing 30. The input gear 35 is secured to the bottom wall 31 by a rivet 35B via a torque damper 35A. The input gear 35 is meshed with a drive gear (not shown) rotatable by rotational driving of the input shaft of the engine. The input gear 35 is rotationally drivable integrally with the clutch housing 30, independently from the output shaft 15.

The input-side rotating plates 20 are rotationally drivable by the rotational driving of the input shaft. As shown in FIG. 1, the input-side rotating plates 20 are held on an inner circumferential surface of the side wall 33 of the clutch housing 30. The input-side rotating plates 20 are held by the clutch housing 30 through spline fitting. The input-side rotating plates 20 are provided to be displaceable in the axial direction of the clutch housing (i.e., in the direction D). The input-side rotating plates 20 are provided to be rotatable integrally with the clutch housing 30.

The input-side rotating plates 20 are pushed against the output-side rotating plates 22. The input-side rotating plates 20 are formed to be annular. The input-side rotating plates 20 are molded by die-cast with aluminum. The input-side rotating plates 20 include a plurality of friction members (not shown) formed of paper pasted on a front surface and a rear surface thereof. Grooves each having a depth of several hundred micrometers are formed between the friction members to hold the clutch oil.

As shown in FIG. 1, the clutch center 40 is housed in the clutch housing 30. The clutch center 40 is located concentrically with the clutch housing 30. The clutch center 40 hold the plurality of output-side rotating plates 22. The output-side rotating plates 22 are located alternately with the input-side rotating plates 20. The clutch center 40 is rotationally drivable integrally with the output shaft 15. The clutch center 40 includes a first clutch center 41 and a second clutch center 51. The first clutch center 41 and the second clutch center 51 are mutually assembled together. The second clutch center 51 is located ahead of the first clutch center 41 in the outward direction M1 of the radial direction M. The second clutch center 51 is outserted over the first clutch center 41.

As shown in FIG. 2, the first clutch center 41 includes an output shaft holding portion 42, an annular base wall 43 located ahead of the output shaft holding portion 42 in the outward direction M1 of the radial direction M, and the plurality of center-side cam portions 60.

As shown in FIG. 1, the output shaft holding portion 42 is coupled with the output shaft 15. A first pressure member 71 described below is outserted over the output shaft holding portion 42. As shown in FIG. 2, the output shaft holding portion 42 is formed to be cylindrical. The output shaft holding portion 42 has an insertion hole 45 formed therein, into which the output shaft 15 is inserted and with which the output shaft 15 is spline-fitted. The insertion hole 45 is formed to penetrate the output shaft holding portion 42. An inner wall 45A, of the output shaft holding portion 42, that defines the insertion hole 45 has a plurality of fitting teeth 47 formed therein, which extend in the axial direction of the output shaft 15 (i.e., in the direction D). The fitting teeth 47 are fitted with the output shaft 15.

Each of the center-side cam portions 60 is formed to have a truncated quadrangular pyramid shape having a cam surface formed of a slope acting as an Assist & Slipper (registered trademark) mechanism. The cam surface as the Assist & Slipper (registered trademark) mechanism generates an assist torque as a force increasing a pressing force (contact pressure force) between the input-side rotating plates 20 and the output-side rotating plates 22 or a slipper torque as a force decreasing the pressing force (contact pressure force) between the input-side rotating plates 20 and the output-side rotating plates 22 and shifting these plates into a half-clutch state. As shown in FIG. 2, each center-side cam portion 60 is formed to project in the second direction D2 from a surface 43D2, on the side of the second direction D2, of the base wall 43. The center-side cam portions 60 are located at an equal interval in the circumferential direction S of the first clutch center 41. In this embodiment, the first clutch center 41 includes three center-side cam portions 60. The number of the center-side cam portions 60 is not limited to three.

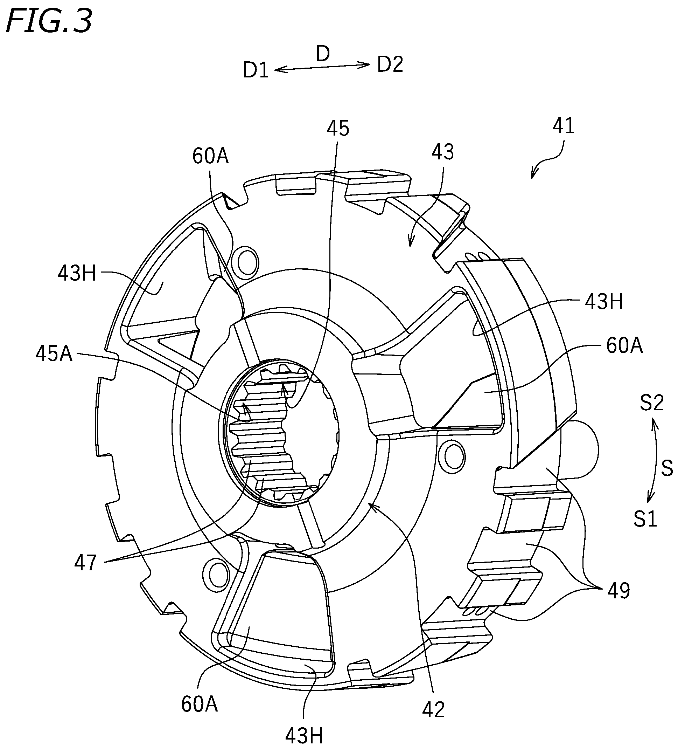

As shown in FIG. 2, the center-side cam portions 60 are located ahead of the output shaft holding portion 42 in the outward direction M1 of the radial direction M. The center-side cam portions 60 each include the center-side assist cam surface 60A (see also FIG. 3) and the center-side slipper cam surface 60S. The center-side assist cam surface 60A is configured to generate a force in such a direction as to move the pressure member 70 toward the clutch center 40, in order to increase the pressing force (contact pressure force) between the input-side rotating plates 20 and the output-side rotating plates 22, when the clutch center 40 rotates with respect to the pressure member 70. In this embodiment, when this force is generated, the position of the pressure member 70 with respect to the clutch center 40 does not change, and the pressure member 70 does not need to move toward the clutch center 40 physically. The pressure member 70 may be displaced with respect to the clutch center 40 physically. The center-side slipper cam surface 60S is configured to separate the pressure member 70 from the clutch center 40, in order to decrease the pressing force (contact pressure force) between the input-side rotating plates 20 and the output-side rotating plates 22, when the clutch center 40 rotates with respect to the pressure member 70. Regarding two of the center-side cam portions 60 adjacent to each other in the circumferential direction S, the center-side assist cam surface 60A of one center-side cam portion 60L and the center-side slipper cam surface 60S of the other center-side cam portion 60M are opposed to each other in the circumferential direction S.

As shown in FIG. 2, the first clutch center 41 includes a plurality of (in this embodiment, three) bosses 62. The bosses 62 hold the pressure member 70 indirectly. The plurality of bosses 62 are located at an equal interval in the circumferential direction S. The bosses 62 are each formed to be cylindrical. The bosses 62 are located ahead of the output shaft holding portion 42 in the outward direction M1 of the radial direction M. The bosses 62 extend toward the pressure member 70 (i.e., in the second direction D2). The bosses 62 are respectively provided on the center-side cam portions 60. The bosses 62 are each provided between the center-side assist cam surface 60A and the center-side slipper cam surface 60S in the direction S. The bosses 62 each have a screw hole 62H formed therein, into which a bolt 28 (see FIG. 1) is inserted. The screw hole 62H extends in the axial direction of the clutch center 40 (i.e., in the direction D).

As shown in FIG. 2 and FIG. 3, the first clutch center 41 has center-side cam holes 43H formed therein, each of which penetrates a portion of the base wall 43. The center-side cam holes 43H penetrate the base wall 43 in the direction D. The center-side cam holes 43H are each located between adjacent ones of the center-side cam portions 60 in the circumferential direction S. As seen in the axial direction of the clutch center 40, each center-side assist cam surface 60A and the corresponding center-side cam hole 43H partially overlap each other.

As shown in FIG. 2, the first clutch center 41 has a plurality of engagement grooves 49 formed therein. The engagement grooves 49 are formed in an outer circumferential surface of the base wall 43. The engagement grooves 49 are recessed in the inward direction M2 of the radial direction M from the outer circumferential surface of the base wall 43.

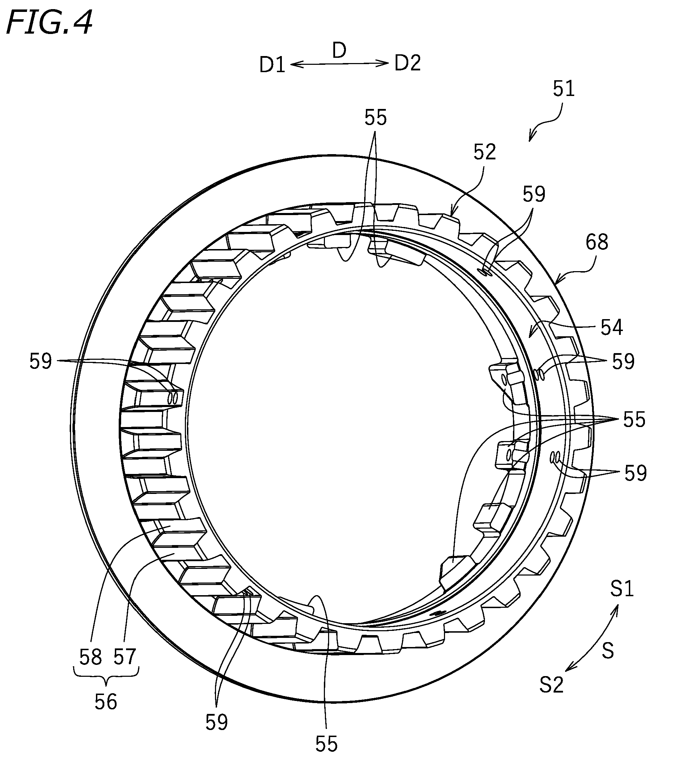

As shown in FIG. 4, the second clutch center 51 includes an annular outer circumferential wall 52, a flange 68 extending in the outward direction M1 of the radial direction M from the outer circumferential wall 52, and a center-side fitting portion 54. The second clutch center 51 holds the plurality of output-side rotating plates 22 located alternately with the input-side rotating plates 20.

As shown in FIG. 4, a spline fitting portion 56 is provided on an outer circumferential surface of the outer circumferential wall 52. The spline fitting portion 56 includes a plurality of center-side fitting teeth 57 extending in the axial direction of the second clutch center 51 (i.e., in the direction D) and arranged along the outer circumferential surface of the outer circumferential wall 52, a plurality of spline grooves 58 each formed between adjacent ones of the center-side fitting teeth 57 and extending in the axial direction of the second clutch center 51 (i.e., in the direction D), and oil discharge holes 59. The center-side fitting teeth 57 hold the output-side rotating plates 22. The plurality of center-side fitting teeth 57 are arranged in the circumferential direction S. The plurality of center-side fitting teeth 57 are formed at an equal interval in the circumferential direction S. The plurality of center-side fitting teeth 57 are formed to have the same shape as each other. The center-side fitting teeth 57 project in the outward direction M1 of the radial direction M from the outer circumferential surface of the outer circumferential wall 52. The oil discharge holes 59 are formed to penetrate the outer circumferential wall 52 in the radial direction M. The oil discharge holes 59 are formed between adjacent ones of the center-side fitting teeth 57. That is, the oil discharge holes 59 are formed in the spline grooves 58. The oil discharge holes 59 are formed in the center-side fitting portion 54. The oil discharge holes 59 communicate the inside and the outside of the second clutch center 51 to each other. The oil discharge holes 59 discharge the clutch oil or the like, flowing into the clutch center 40 from the output shaft 15, to the outside of the clutch center 40. The clutch oil discharged from the oil discharge holes 59 is supplied to the input-side rotating plates 20 and the output-side rotating plates 22 located ahead of the oil discharge holes 59 in the outward direction M1 of the radial direction M.

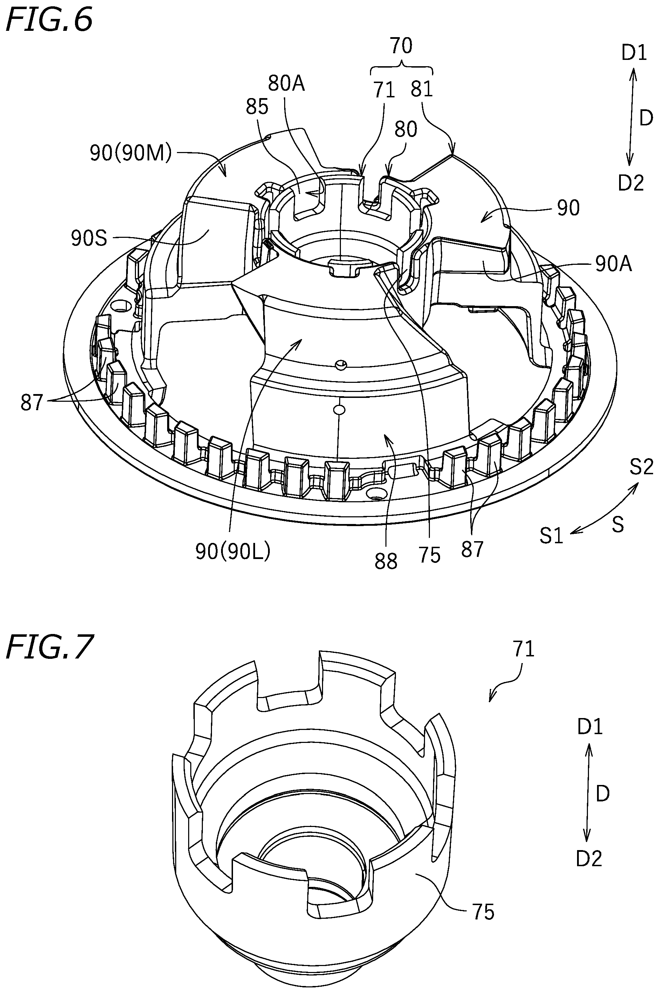

The output-side rotating plates 22 are held by the spline fitting portion 56 of the second clutch center 51 and the pressure member 70. A portion of the output-side rotating plates 22 is held, through spline fitting, by the center-side fitting teeth 57 and the spline grooves 58 of the second clutch center 51. Another portion of the output-side rotating plates 22 is held by pressure-side fitting teeth 87 described below (see FIG. 6) of the pressure member 70. The output-side rotating plates 22 are provided to be displaceable in the axial direction of the clutch center 40 (i.e., in the direction D). The output-side rotating plates 22 are provided to be rotatable integrally with the clutch center 40. All the output-side rotating plates 22 may be held by the pressure member 70 (e.g., the pressure-side fitting teeth 87).

The output-side rotating plates 22 are pushed against the input-side rotating plates 20. The output-side rotating plates 22 are formed to be annular. The output-side rotating plates 22 are each molded by punching a thin plate of an SPCC material into an annular shape. The friction members included in the input-side rotating plates 20 may be provided in the output-side rotating plates 22 instead of the input-side rotating plates 20, or may be provided in both of the input-side rotating plates 20 and the output-side rotating plates 22.

As shown in FIG. 4, the center-side fitting portion 54 is formed on an inner circumferential surface of the outer circumferential wall 52. The center-side fitting portion 54 is configured to be slidably outserted over pressure-side fitting portions 88 described below (see FIG. 6). An inner diameter of the center-side fitting portion 54 is set to have a fitting tolerance that permits the clutch oil, flowing out from a tip 15T (see FIG. 1) of the output shaft 15, to flow between the center-side fitting portion 54 and the pressure-side fitting portions 88. That is, there is a gap formed between the center-side fitting portion 54 and the pressure-side fitting portions 88.

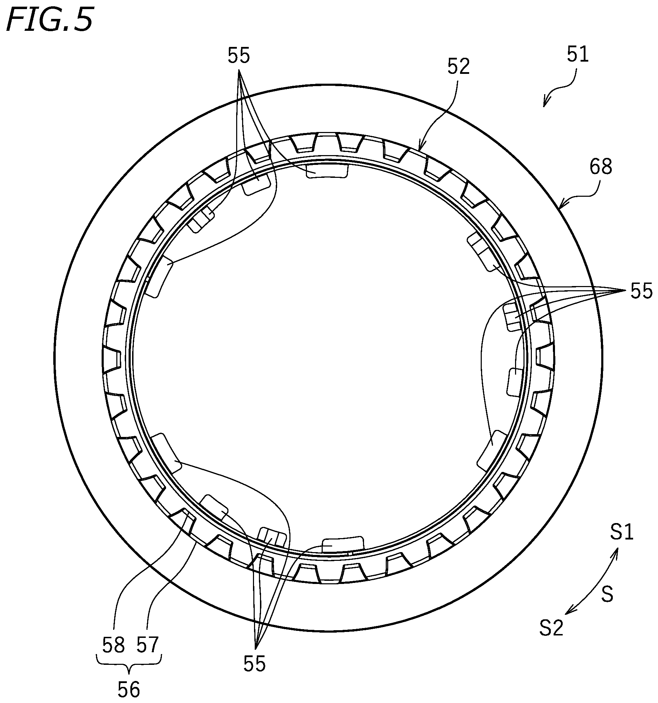

: As shown in FIG. 4 and FIG. 5, the second clutch center 51 includes a plurality of engagement projections 55. The engagement projections 55 are engaged with the engagement grooves 49 (see FIG. 2) of the first clutch center 41. The engagement projections 55 are formed on the inner circumferential surface of the outer circumferential wall 52. The engagement projections 55 project in the inward direction M2 of the radial direction M from the inner circumferential surface of the outer circumferential wall 52. The engagement projections 55 are located ahead of the outer circumferential wall 52 in the first direction D1.

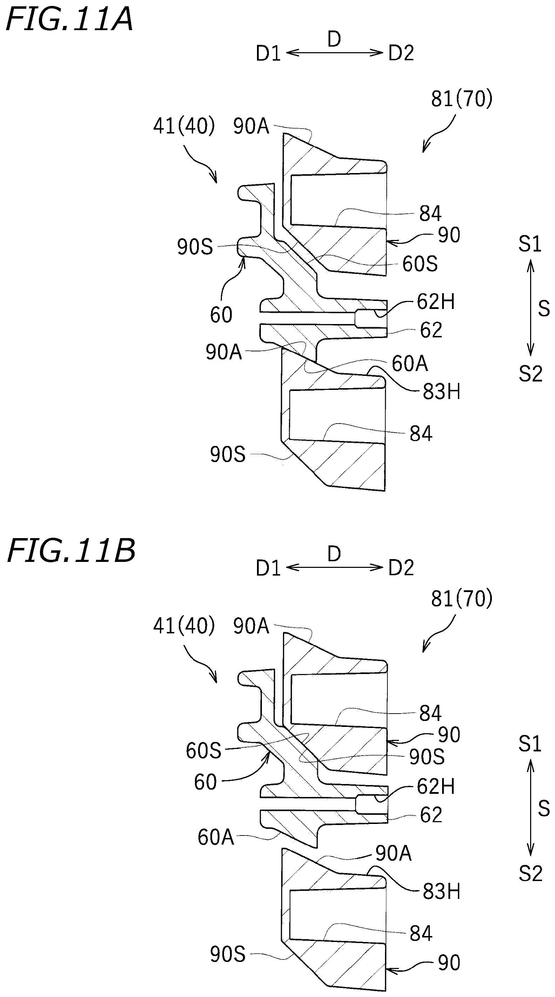

As shown in FIG. 1, the pressure member 70 is provided to be movable toward, or away from, the clutch center 40. The pressure member 70 is provided to be rotatable with respect to the clutch center 40. The pressure member 70 is configured to be capable of pressing the input-side rotating plates 20 and the output-side rotating plates 22. The pressure member 70 is located concentrically with the clutch center 40 and the clutch housing 30. As shown in FIG. 6, the pressure member 70 includes a first pressure member 71 and a second pressure member 81. The first pressure member 71 and the second pressure member 81 are mutually assembled together. The second pressure member 81 is located ahead of the first pressure member 71 in the outward direction M1 of the radial direction M. The second pressure member 81 is outserted over the first pressure member 71. The first pressure member 71 and the second pressure member 81 are configured to be movable with respect to each other in the direction D. The first pressure member 71 and the second pressure member 81 are configured to be rotatable with respect to each other within a predetermined angle range in the circumferential direction S. The "predetermined angle range" refers to a range of angles by which the first pressure member 71 and the second pressure member 81 are rotated from a state in FIG. 11A (a state where a pressure-side assist cam surface 90A described below and the center-side assist cam surface 60A are in contact with each other) to a state in FIG. 11B (more specifically, a state where a pressure-side slipper cam surface 90S described below and the center-side slipper cam surface 60S are in contact with each other and the second pressure member 81 contacts the stopper plates 100). As described above, the pressure member 70 includes the first pressure member 71 and the second pressure member 81, and therefore, allows the first pressure member 71 and the second pressure member 81 to move (rotate) independently from each other.

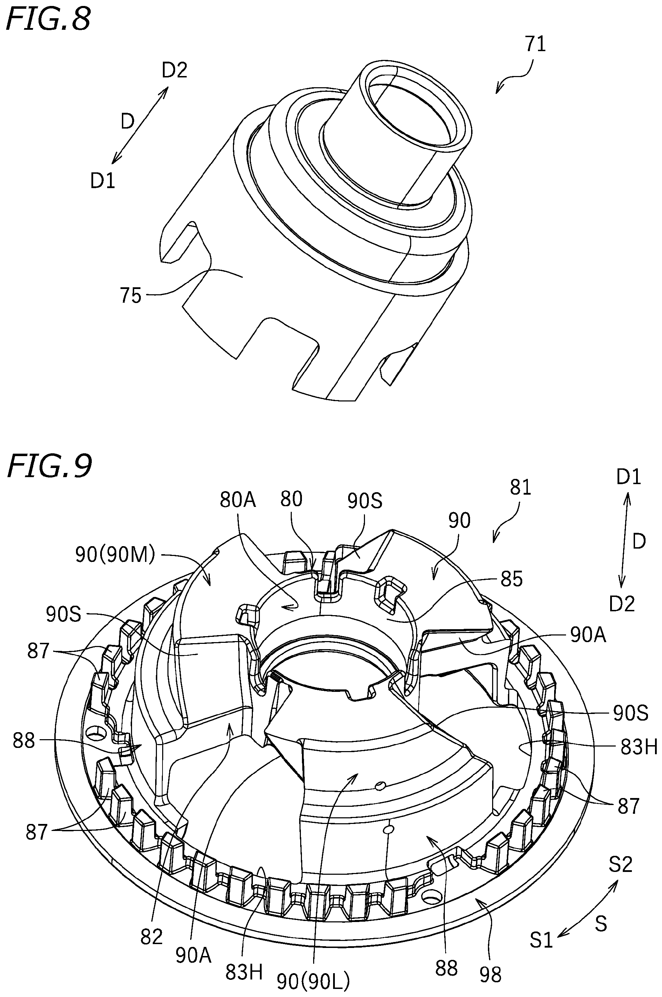

As shown in FIG. 7 and FIG. 8, the first pressure member 71 is formed to be cylindrical. The first pressure member 71 is configured to be outserted over the output shaft holding portion 42 (see FIG. 1). The first pressure member 71 houses the tip 15T (see FIG. 1) of the output shaft 15. The first pressure member 71 receives a pressing force from the push member 16B (see FIG. 1). The first pressure member 71 is configured to be movable in the second direction D2 by a clutch operation (e.g., an operation made on a clutch lever or a button). The first pressure member 71 receives the clutch oil flowing out from the tip 15T of the output shaft 15. The first pressure member 71 is outserted over the output shaft holding portion 42, so that the pressure member 70 is positioned with respect to the clutch center 40. The release bearing 18 is located inward of the first pressure member 71. The first pressure member 71 holds the release bearing 18.

As shown in FIG. 1, the second pressure member 81 is configured to be movable in the second direction D2 by being pressed by the first pressure member 71. The second pressure member 81 is inserted into the second clutch center 51. With this configuration, the second pressure member 81 is positioned in the radial direction M. The second pressure member 81 is provided to be slidable against the second clutch center 51 in the direction D. The second pressure member 81 and the second clutch center 51 are configured to be rotatable with respect to each other in the circumferential direction S. As shown in FIG. 9, the second pressure member 81 includes a body 82, and a flange 98 connected with an outer circumferential edge, on the side of the second direction D2, of the body 82 and extending in the outward direction M1 of the radial direction M. The body 82 projects to be ahead of the flange 98 in the first direction D1. The flange 98 is located ahead of a cylindrical portion 80 described below in the outward direction M1 of the radial direction M. The second pressure member 81 holds the plurality of output-side rotating plates 22 located alternately with the input-side rotating plates 20. The flange 98 is configured to be capable of pressing the input-side rotating plates 20 and the output-side rotating plates 22.

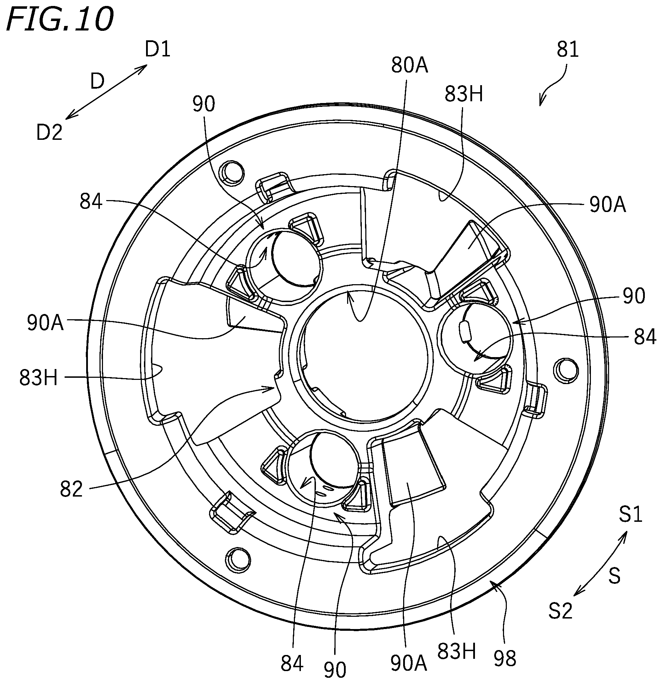

As shown in FIG. 9, the body 82 includes the cylindrical portion 80, the plurality of pressure-side cam portions 90, the plurality of pressure-side fitting portions 88, and spring housings 84 (see FIG. 10).

As shown in FIG. 9, the cylindrical portion 80 includes a partition wall 80A formed to be cylindrical. The cylindrical portion 80 is formed integrally with the pressure-side cam portions 90. The pressure-side cam portions 90 are located ahead of the partition wall 80A in the outward direction M1 of the radial direction M. As shown in FIG. 6, the cylindrical portion 80 houses the first pressure member 71. An inner circumferential surface 85 of the partition wall 80A is configured to be slidable against an outer circumferential surface 75 of the first pressure member 71 in the direction D.

Each of the pressure-side cam portions 90 is formed to have a truncated quadrangular pyramid shape having a cam surface formed of a slope acting as an Assist & Slipper (registered trademark) mechanism. The cam surface as the Assist & Slipper (registered trademark) mechanism generates an assist torque or a slipper torque as a result of sliding against the corresponding center-side cam portion 60 (see FIG. 2 and the like). As shown in FIG. 9, each pressure-side cam portion 90 is formed to project to be ahead of the flange 98 in the first direction D1. The pressure-side cam portions 90 are located at an equal interval in the circumferential direction S of the second pressure member 81. In this embodiment, the second pressure member 81 includes three pressure-side cam portions 90. The number of the pressure-side cam portions 90 is not limited to three.

As shown in FIG. 9, the pressure-side cam portions 90 are located ahead of the cylindrical portion 80 in the outward direction M1 of the radial direction M. The pressure-side cam portions 90 each include the pressure-side assist cam surface 90A (see also FIG. 10) and the pressure-side slipper cam surface 90S. The pressure-side assist cam surface 90A is configured to be contactable with the center-side assist cam surface 60A. The pressure-side assist cam surface 90A is configured to generate a force in such as direction as to move the pressure member 70 toward the clutch center 40, in order to increase the pressing force (contact pressure force) between the input-side rotating plates 20 and the output-side rotating plates 22, when the pressure member 70 rotates with respect to the clutch center 40. The pressure-side slipper cam surface 90S is configured to be contactable with the center-side slipper cam surface 60S. The pressure-side slipper cam surface 90S is configured to separate the pressure member 70 from the clutch center 40, in order to decrease the pressing force (contact pressure force) between the input-side rotating plates 20 and the output-side rotating plates 22, when the pressure member 70 rotates with respect to the clutch center 40. Regarding two of the pressure-side cam portions 90 adjacent to each other in the circumferential direction S, the pressure-side assist cam surface 90A of one pressure-side cam portion 90L and the pressure-side slipper cam surface 90S of the other pressure-side cam portion 90M are opposed to each other in the circumferential direction S.

Effects of the center-side cam portions 60 and the pressure-side cam portions 90 will now be described. Referring to FIG. 11A, when the rotation speed of the engine increases so that a rotation driving force input to the input gear 35 and the clutch housing 30 is allowed to be transferred to the output shaft 15 through the clutch center 40, a rotation force in the first circumferential direction S1 is applied to the pressure member 70. Thus, with the effects of the center-side assist cam surface 60A and the pressure-side assist cam surface 90A, a force in the first direction D1 is generated in the pressure member 70. Accordingly, a contact pressure force between the input-side rotating plates 20 and the output-side rotating plates 22 increases.

By contrast, referring to FIG. 11B, when the rotation speed of the output shaft 15 exceeds the rotation speed of the input gear 35 and the clutch housing 30 and a back torque is generated, a rotation force in the first circumferential direction S1 is applied to the clutch center 40. Thus, with the effects of the center-side slipper cam surface 60S and the pressure-side slipper cam surface 90S, the pressure member 70 moves in the second direction D2 to release the input-side rotating plates 20 and the output-side rotating plates 22 from the contact pressure force. In this manner, inconveniences regarding the engine and the transmission caused by the back torque are avoided. The rotation force in the first circumferential direction S1 is applied to the clutch center 40, and as a result, the first pressure member 71 and the second pressure member 81 rotate with respect to each other in the circumferential direction S.

As shown in FIG. 9, the pressure-side fitting portions 88 are located ahead of the pressure-side cam portions 90 in the outward direction M1 of the radial direction M. The pressure-side fitting portions 88 are located ahead of the pressure-side cam portions 90 in the second direction D2. The pressure-side fitting portions 88 are configured to be slidably inserted into the center-side fitting portion 54 (see FIG. 4).

As shown in FIG. 9 and FIG. 10, the second pressure member 81 has pressure-side cam holes 83H formed therein, each of which penetrates a portion of the body 82 and a portion of the flange 98. The pressure-side cam holes 83H are located ahead of the cylindrical portion 80 in the outward direction M1 of the radial direction M. The pressure-side cam holes 83H each extend from a position to the side of the cylindrical portion 80 to a position ahead of the corresponding pressure-side fitting portion 88 in the outward M1 of the radial direction M. The pressure-side cam holes 83H are each formed between the pressure-side assist cam surface 90A of one of two adjacent pressure-side cam portions 90 and the pressure-side slipper cam surface 90S of the other of the two adjacent pressure-side cam portions 90. As seen in the axial direction of the second pressure member 81, each pressure-side assist cam surface 90A and the corresponding pressure-side cam hole 83H partially overlap each other. The bosses 62 (see FIG. 2) of the first clutch center 41 are respectively inserted into the pressure-side cam holes 83H. The bosses 62 respectively penetrate the pressure-side cam holes 83H.

As shown in FIG. 9, the second pressure member 81 includes the plurality of pressure-side fitting teeth 87 located on the flange 98. The pressure-side fitting teeth 87 hold the output-side rotating plates 22. The pressure-side fitting teeth 87 project in the first direction D1 from the flange 98. The pressure-side fitting teeth 87 are located ahead of the cylindrical portion 80 in the outward direction M1 of the radial direction M. The pressure-side fitting teeth 87 are located ahead of the pressure-side cam portions 90 in the outward direction M1 of the radial direction M. The pressure-side fitting teeth 87 are located ahead of the pressure-side fitting portions 88 in the outward direction M1 of the radial direction M. The plurality of pressure-side fitting teeth 87 are arranged in the circumferential direction S. The plurality of pressure-side fitting teeth 87 are located at an equal interval in the circumferential direction S. In this embodiment, a portion of the pressure-side fitting teeth 87 is removed, and therefore, the interval corresponding to such removed pressure-side fitting teeth 87 is wider than the other intervals. However, adjacent ones of the other pressure-side fitting teeth 87 are located at an equal interval.

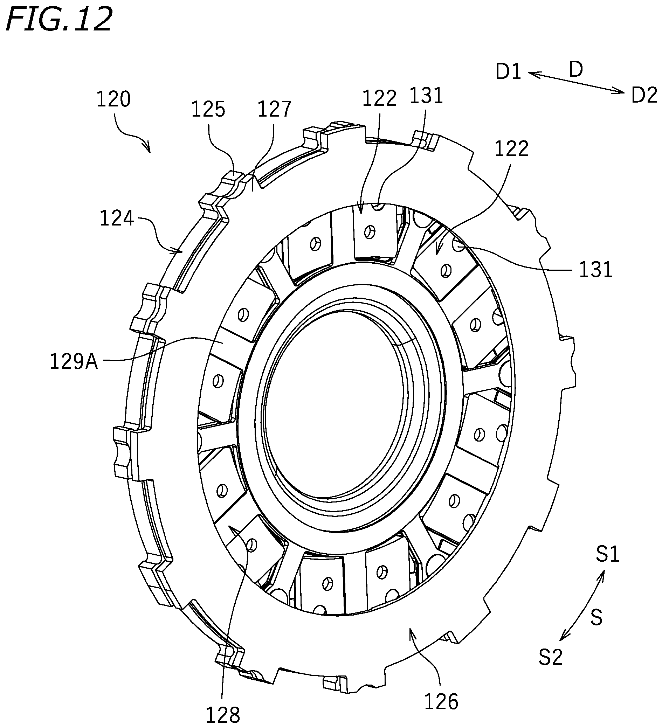

As shown in FIG. 1, spring housings 84 are respectively formed in the pressure-side cam portions 90 (see also FIG. 10). The spring housings 84 are located ahead of the partition wall 80A of the cylindrical portion 80 in the outward direction M1 of the radial direction M. The spring housings 84 are formed to be recessed in the first direction D1 from the side of the second direction D2 (see also FIG. 12A). The spring housings 84 are each formed to be circular. The spring housings 84 respectively house clutch springs 25.

As shown in FIG. 1, the clutch springs 25 are respectively housed in the spring housings 84. An end of each of the clutch springs 25 on the side of the first direction D1 is in contact with the second pressure member 81. An end of each of the clutch springs 25 on the side of the second direction D2 is in contact with the corresponding stopper plate 100. The clutch springs 25 urge the pressure member 70 (more specifically, the second pressure member 81) toward the clutch center 40 (i.e., in the first direction D1). The clutch springs 25 are, for example, coil springs formed of helically wound spring steel. The clutch springs 25 extend in the direction D.

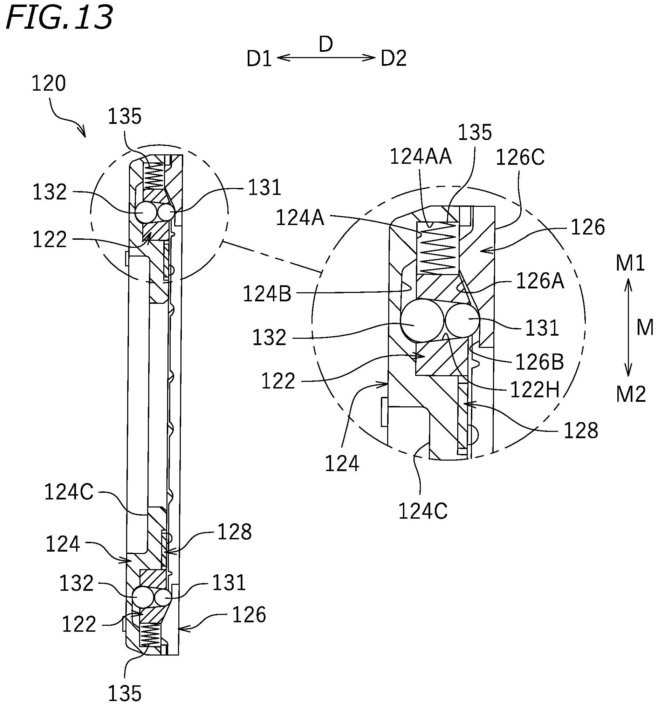

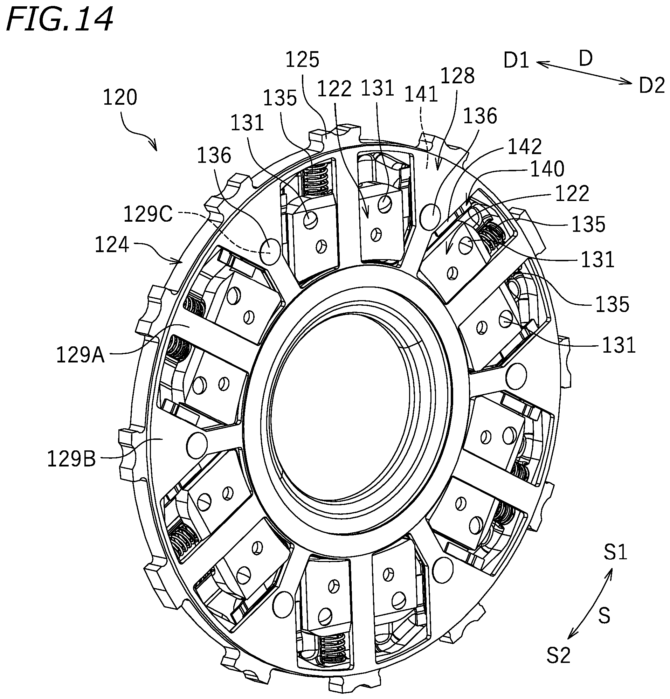

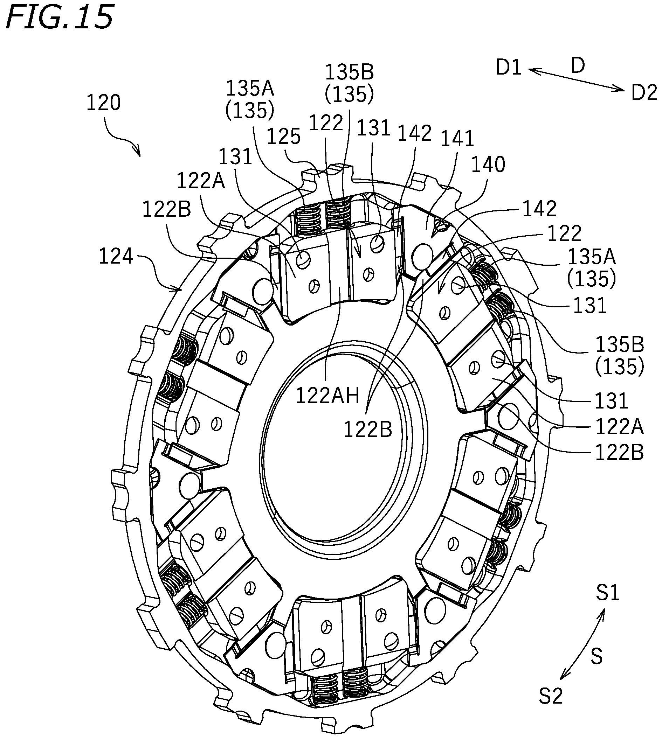

As shown in FIG. 1, the centrifugal clutch mechanism 120 is provided in the clutch housing 30. The centrifugal clutch mechanism 120 is provided ahead of the clutch center 40 in the first direction D1. The centrifugal clutch mechanism 120 is held by the clutch housing 30. The centrifugal clutch mechanism 120 is provided to be rotatable integrally with the clutch housing 30. As shown in FIG. 12 and FIG. 13, the centrifugal clutch mechanism 120 includes a plurality of weight members 122, a holding member 124, a pressure-contact member 126, a guide member 128 (see also FIG. 14), first spherical members 131, second spherical members 132, springs 135 (see also FIG. 1), and urging members 140 (see FIG. 15). When the weight members 122 are at outward M1 positions in the radial direction M, the centrifugal clutch mechanism 120 puts the input-side rotating plates 20 and the output-side rotating plates 22 into pressure contact with each other to provide a state where the transfer of the rotation driving force of the input shaft to the output shaft 15 is allowed. When the weight members 122 are at inward M2 positions in the radial direction M, the centrifugal clutch mechanism 120 releases the input-side rotating plates 20 and the output-side rotating plates 22 from the contact pressure force to provide a state where the transfer of the rotation driving force of the input shaft to the output shaft 15 is blockable. The centrifugal clutch mechanism 120 is configured to be capable of pressing the assisting clutch plate 150 (see FIG. 1).

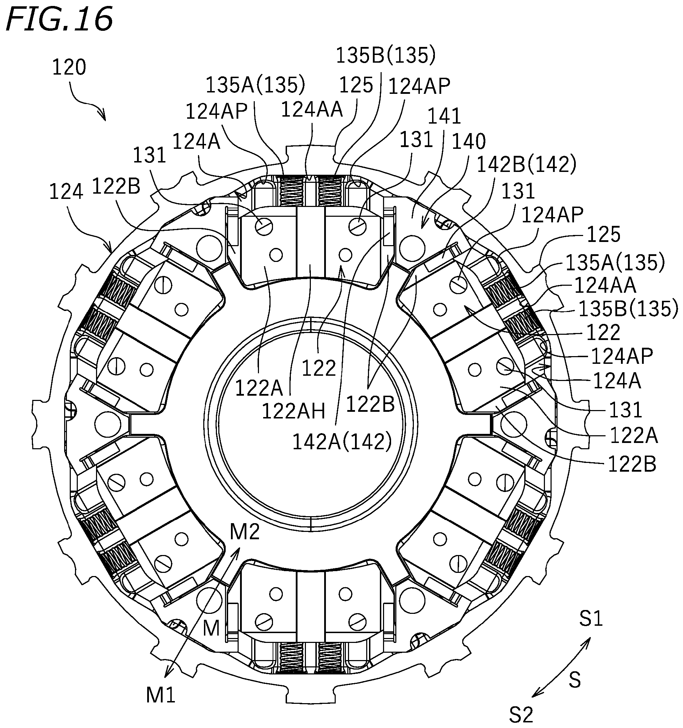

As shown in FIG. 16, the plurality of weight members 122 are arranged in the circumferential direction S. The weight members 122 are configured to be movable from the inward M2 positions to the outward M1 positions in the radial direction M by a centrifugal force caused by the rotation of the clutch housing 30. As shown in FIG. 13, the weight members 122 are respectively housed in housings 124A, described below, of the holding member 124. As shown in FIG. 15, the weight members 122 each include a generally cuboid body 122A and planar portions 122B respectively located at both of two ends of the body 122A in the circumferential direction S. The weight members 122 each have penetrating holes 122H (see FIG. 13) formed therein, penetrating the body 122A in the axial direction of the output shaft 15 (i.e., in the direction D). One weight member 122 has two penetrating holes 122H formed therein. The planar portions 122B are located ahead of the body 122A in the first direction D1. The planar portions 122B each have a plane perpendicular to the axial direction of the output shaft 15. The planar portions 122B are respectively urged by urging portions 142, described below, of the urging members 140. In a state of not being provided with a centrifugal force, the weight members 122 are held at the inward M2 positions in the radial direction M by the springs 135. When being provided with a centrifugal force, the weight members 122 move in the outward direction M1 of the radial direction M against the urging force of the springs 135 to arrive at the outward M1 positions in the radial direction M.

As shown in FIG. 13, the first spherical members 131 are attached to the weight members 122. The first spherical members 131 are each, for example, a steel sphere. Each first spherical member 131 partially projects from one opening (in this embodiment, on the side of the second direction D2) of the corresponding penetrating hole 122H formed in the weight member 122 and thus contacts a rolling surface of the pressure-contact member 126. The second spherical member 132 are attached to the weight members 122. The second spherical member 132 are each, for example, a steel sphere. Each second spherical member 132 partially projects from the other opening (in this embodiment, on the side of the first direction D1) of the corresponding penetrating hole 122H formed in the weight member 122 and thus contacts a rolling surface of the holding member 124. The first spherical members 131 and the second spherical members 132 are configured to be rollable.

As shown in FIG. 1, the springs 135 are located ahead of the weight members 122 in the outward direction M1 of the radial direction M. The springs 135 are provided in the holding member 124. The springs 135 are respectively housed in the housings 124A (see FIG. 13) of the holding member 124. A portion of each of the springs 135 is located in the corresponding weight member 122. The springs 135 urge the weight members 122 in the inward direction M2 of the radial direction M. The springs 135 are each, for example, a coil spring. As shown in FIG. 16, the springs 135 include first springs 135A and second springs 135B arranged in the circumferential direction S. The first springs 135A and the second springs 135B have the same shape as each other. A pair of the first spring 135A and the second spring 135B are located between a pair of the first spherical members 131 in the circumferential direction S. The pair of first spherical members 131 may be located between the pair of the first spring 135A and the second spring 135B in the circumferential direction S. The spring 135 is an example of elastic member. The elastic member may be formed of rubber. The first spring 135A is an example of first elastic member, and the second spring 135B is an example of second elastic member.

As shown in FIG. 13, the holding member 124 holds the weight members 122 such that the weight members 122 are movable between the inward M2 positions and the outward M1 positions in the radial direction M. The holding member 124 is formed to be annular. The holding member 124 is formed by die-cast with aluminum. The holding member 124 includes the plurality of housings 124A formed to be arranged in the circumferential direction S, a pressing portion 124C, and engagement projections 125 (see FIG. 14). The housings 124A respectively house the weight members 122. The housings 124A are each formed to be recessed in correspondence with the shape and the movable range of the weight member 122. The housings 124A are each configured such that ends of the springs 135 are contactable with an outer circumferential wall 124AA thereof. The housings 124 each include a contact surface 124B, which contacts the weight member 130 when the weight member 122 moves in the radial direction M. The contact surface 124B faces the weight member 122 in the axial direction of the output shaft 15 (i.e., in the direction D). In this embodiment, the second spherical members 132 of the weight member 130 contact the contact surface 124B. As shown in FIG. 16, the engagement projections 125 are located ahead of the springs 135 in the outward direction M1 of the radial direction M. The engagement projections 125 project in the outward direction M1 of the radial direction M. The engagement projections 125 are engaged with the clutch housing 30. The plurality of engagement projections 125 are formed to be arranged in the circumferential direction S. The holding member 124 includes pressed surfaces 124AP, each of which is a portion of the outer circumferential wall 124AA of the corresponding housing 124A and is pressed by the corresponding weight member 122 when the weight member 122 is at the outward M1 position in the radial direction M. A stress in the outward direction M1 of the radial direction M is applied to the pressed surfaces 124AP by the weight member 122. The engagement projections 125 and the pressed surfaces 124AP are located to be shifted from each other in the circumferential direction S. In this embodiment, the engagement projections 125 are each located between a pair of the pressed surfaces 124AP in the circumferential direction S. The holding member 124 is an example of contact member.

As shown in FIG. 13, the pressure-contact member 126 is configured to move in the second direction D2 by the movement of the weight members 122 from the inward M2 positions to the outward M1 positions in the radial direction M and thus to put the input-side rotating plates 20 and the output-side rotating plates 22 into pressure contact with each other. The pressure-contact member 126 is formed to be annular. The pressure-contact member 126 includes a plurality of gradient portions 126A formed to be arranged in the circumferential direction S, grooves 126B respectively formed at the positions of the gradient portions 126A, and a pressing surface 126C. The gradient portions 126A are respectively located at positions corresponding to the weight members 122. The gradient portions 126A are inclined in the first direction D1 while inclining in the outward direction M1 of the radial direction M from the side of the inward direction M2. In a state where the clutch housing 30 is at a pause, the weight members 122 are held at the inward M2 positions by the urging force of the springs 135. In a state where the weight members 122 are provided with a centrifugal force as a result of the clutch housing 30 rotating, the weight members 122 move along the gradient portions 126A, so that the pressure-contact member 126 moves in a direction to be away from the holding member 124 (i.e., in the second direction D2). As a result, the pressing surface 126C of the pressure-contact member 126 presses the flange 68 (see FIG. 1) of the second clutch center 51 in the second direction D2. As shown in FIG. 12, the pressure-contact member 126 includes a plurality of projections 127 formed to be arranged in the circumferential direction S. The projections 127 overlap the engagement projections 125 of the holding member 124. The projections 127 are engaged with the clutch housing 30. The holding member 124 and the pressure-contact member 126 are held on an inner circumferential surface of the side wall 33 of the clutch housing 30 via the engagement projections 125 and the projections 127, like the input-side rotating plates 20. The holding member 124 and the pressure-contact member 126 are held by the clutch housing 30 through spline fitting. The holding member 124 and the pressure-contact member 126 are provided to be displaceable in the axial direction of the clutch housing (i.e., the direction D). The holding member 124 and the pressure-contact member 126 are provided to be rotatable integrally with the clutch housing 30.

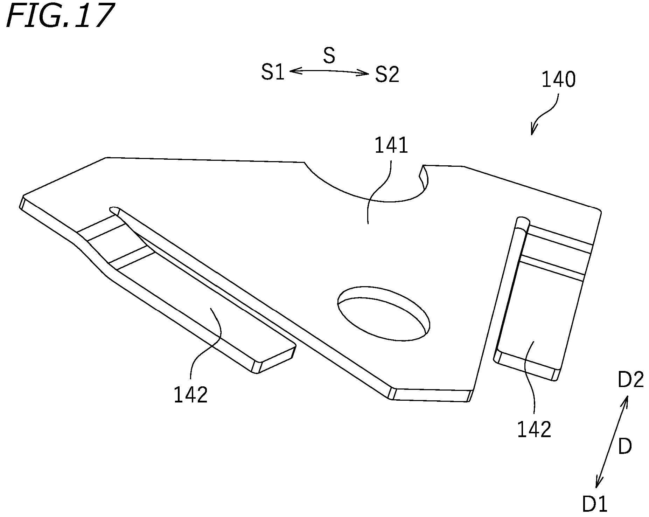

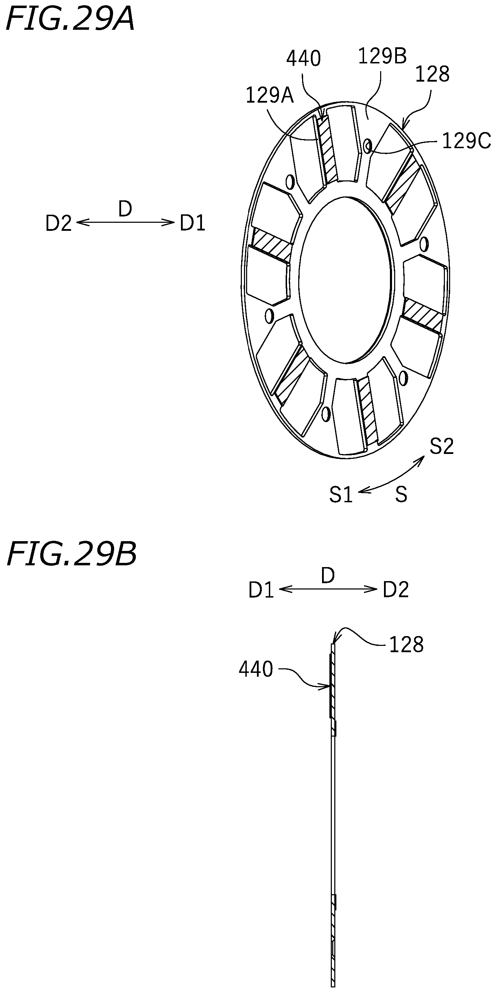

As shown in FIG. 12 and FIG. 13, the guide member 128 is located between the holding member 124 and the pressure-contact member 126 in the axial direction of the output shaft 15 (i.e., in the direction D). The guide member 128 is attached to the holding member 124. The guide member 128 is secured to the holding member 124. More specifically, the guide member 128 is secured to a surface, of the holding member 124, in which the housings 124A are formed. The guide member 128 holds the weight members 122 such that the weight members 122 are movable in the radial direction M. The guide member 128 guides the movement of the weight members 122 in the radial direction M. As shown in FIG. 14, the guide member 128 is formed to be annular. The guide member 128 includes guide portions 129A guiding the movement of the weight members 122 and securing portions 129B securing the urging members 140. The guide portions 129A extend in the radial direction M. The guide portions 129A are respectively fit into grooves 122AH (see FIG. 15) each formed generally at a center of the body 122A of the corresponding weight member 122. The securing portions 129B are each formed to be generally triangular. The securing portions 129B respectively secure secured portions 141 described below (see FIG. 17) of the urging members 140. The securing portions 129B each have an insertion hole 129C (see FIG. 14 and FIG. 29A) formed therein, into which a rivet 136 described below is inserted.

The urging members 140 are located between the holding member 124 and the pressure-contact member 126 in the axial direction of the output shaft 15 (i.e., in the direction D). As shown in FIG. 14, the urging members 140 are located between the holding member 124 and the guide member 128 in the axial direction of the output shaft 15 (i.e., in the direction D). The urging members 140 are provided between the guide member 128 and the weight members 122. The urging members 140 are provided on the guide member 128. The urging members 140 are secured to the holding member 124. The urging members 140 are each provided on the guide member 128 at a position between adjacent ones of the weight members 122. The urging members 140 are each secured to the holding member 124 at a position between adjacent ones of the weight members 122. The urging members 140 are each secured to the holding member 124 by the rivet 136, together with the guide member 128. The urging members 140 may each be secured to the holding member 124 by a tightening member such as a bolt or the like, instead of the rivet 136. In this embodiment, the urging members 140 are formed separately from the guide member 128. The urging members 140 may be formed integrally with the guide member 128. The urging members 140 urge the weight members 122, held by the holding member 124, in the axial direction of the output shaft 15. The urging members 140 urge the weight members 122 in the axial direction of the output shaft 15 and toward the contact surfaces 124B (see FIG. 1). The urging members 140 press ends, in the circumferential direction S, of the weight members 122. The urging members 140 constantly urge the weight members 122 in the axial direction of the output shaft 15. That is, the urging members 140 urge the weight members 122 in the axial direction of the output shaft 15 in the entire time period from the time when the weight members 122 are at the inward M2 positions in the radial direction M until the time when the weight members 122 are at the outward M1 positions in the radial direction M. In this embodiment, the urging members 140 urge the weight members 122 in the first direction D1. The urging members 140 urge the weight members 122 in the axial direction of the output shaft 15 and toward the holding member 124. The urging members 140 press the second spherical members 132 of the centrifugal clutch mechanism 120 to the holding member 124 (in this embodiment, to the contact surfaces 124B). The urging members 140 permit the weight members 122 to move in the radial direction M.

As shown in FIG. 17, each of the urging members 140 is formed of a plate-like member. The urging member 140 is formed of, for example, an SPCC (Steel Plate Cold Commercial) material. The urging member 140 is a so-called leaf spring. The urging member 140 includes the secured portion 141 formed to be generally triangular and the urging portions 142 provided ahead of the secured portion 141 in the outward direction M1 of the radial direction M and provided respectively at both of two ends of the secured portion 141 in the circumferential direction S. The secured portion 141 contacts the holding member 124 and the guide member 128. The urging portions 142 are located ahead of the secured portion 141 in the first direction D1. The urging portions 142 contact the weight members 122. More specifically, the urging portions 142 contact the planar portions 122B (see FIG. 15) of the weight members 122. The urging portions 142 urge the weight members 122 in the axial direction of the output shaft 15 (i.e., in the direction D). The urging portions 142 urge the weight members 122 in the first direction D1. The urging portions 142 are each formed to be elastically deformable. As shown in FIG. 16, the urging portions 142 include a first urging portion 142A provided at an end, on the side of the first circumferential direction S1, of the secured portion 141, and a second urging portion 142B provided at an end, on the side of the second circumferential direction S2, of the secured portion 141. The first urging portion 142A urges the planar portion 122B of the weight member 122 located ahead of the urging member 140 in the first circumferential direction S1. The second urging portion 142B urges the planar portion 122B of the weight member 122 located ahead of the urging member 140 in the second circumferential direction S2. In this manner, one urging member 140 urges a plurality of the weight members 122 (in this embodiment, two weight members 122) in the axial direction of the output shaft 15.

In the centrifugal clutch mechanism 120 having such a configuration, when the weight members 122 are not provided with a centrifugal force, the weight members 122 are held at the inward M2 positions in the radial direction M, and thus the input-side rotating plates 20 and the output-side rotating plates 22 are released from the contact pressure force. By contrast, when the weight members 122 are provided with a centrifugal force, the weight members 122 move from the inward M2 positions to the outward M1 positions in the radial direction M. At this point, the weight members 122 are urged in the first direction D1 by the urging members 140, and therefore, move smoothly from the inward M2 positions to the outward M1 positions in the radial direction M without vibrating in the axial direction of the output shaft 15 (i.e., in the direction D). As a result, the pressing surface 126C formed in the pressure-contact member 126 presses the input-side rotating plates 20 and the output-side rotating plates 22 via the flange 68 of the second clutch center 51 into a contact pressure state, thus to provide a state where the transfer of the rotation driving force of the input shaft to the output shaft 15 is allowed. At this point, the holding member 124 moves in the first direction D1, and the pressing portion 124C formed in the holding member 124 presses the assisting clutch plate 150.

As shown in FIG. 1, the assisting clutch plate 150 is provided in the clutch housing 30. The assisting clutch plate 150 is secured to the output shaft 15. The assisting clutch plate 150 has an insertion hole 152H formed therein, into which the output shaft 15 is inserted and with which the output shaft 15 is spline-fitted. The assisting clutch plate 150 is located ahead of a portion of the centrifugal clutch mechanism 120 in the first direction D1. The assisting clutch plate 150 is adjacent to the first clutch center 41.

The assisting clutch plate 150 is configured to be pressed by the centrifugal clutch mechanism 120 (in this embodiment, the pressing portion 124C of the holding member 124) when the input-side rotating plates 20 and the output-side rotating plates 22 are in pressure contact with each other (i.e., when the weight members 122 of the centrifugal clutch mechanism 120 are located at the outward M1 positions in the radial direction M), thus to provide a state where the transfer of the rotation driving force of the input shaft to the output shaft 15 is allowed. The assisting clutch plate 150 is configured to be released from a state of being pressed by the centrifugal clutch mechanism 120 (in this embodiment, the pressing portion 124C of the holding member 124) when the input-side rotating plates 20 and the output-side rotating plates 22 are released from the contact pressure force (i.e., when the weight members 122 of the centrifugal clutch mechanism 120 are located at the inward M2 positions in the radial direction M), thus to provide a state where the transfer of the rotation driving force of the input shaft to the output shaft 15 is blocked.

As shown in FIG. 1, the stopper plates 100 are provided to be contactable with the pressure member 70. The stopper plates 100 suppress the movement of the pressure member 70 away from the clutch center 40 by a predetermined distance or longer in the second direction D2. The stopper plates 100 are respectively secured to the bosses 62 of the first clutch center 41 by the bolts 28. In a state where the clutch springs 25 are located in the spring housings 84, the pressure member 70 is secured to the clutch center 40 by the bolts 28 being tightened to the bosses 62 via the stopper plates 100. The stopper plates 100 are formed to be ring-shaped as seen in a plan view.

As described above, in the clutch device 10 according to this embodiment, the urging members 140 of the centrifugal clutch mechanism 120 are located between the holding member 124 and the pressure-contact member 126 in the axial direction of the output shaft 15, and urge the weight members 122 held by the holding member 124 in the axial direction of the output shaft 15 and also permit the weight members 122 to move in the radial direction M. According to this embodiment, the weight members 122 are urged by the urging members 140 in the axial direction of the output shaft 15, and therefore, the vibration of the weight members 122 in the axial direction of the output shaft 15 is suppressed even though the engine or the like vibrates. As a result, the weight members 122 move smoothly in the radial direction M. Therefore, the thrust in the axial direction of the output shaft 15, generated in the weight members 122 by the centrifugal force caused by the rotation of the clutch housing 30, is effectively transferred to the pressure-contact member 126.

In the clutch device 10 according to this embodiment, the urging members 140 are each formed of a plate-like member. According to this embodiment, the urging members 140, which have a simple configuration, urge the weight members 122 in the axial direction of the output shaft 15.

The clutch device 10 according to this embodiment includes the guide member 128 located between the holding member 124 and the pressure-contact member 126 in the axial direction of the output shaft 15 and guiding the movement of the weight members 122 in the radial direction M. The urging members 140 are provided on the guide member 128. According to this embodiment, the urging members 140 urge predetermined portions of the weight members 122 in the axial direction of the output shaft 15 more certainly.

In the clutch device 10 according to this embodiment, the urging members 140 are secured to the holding member 124. According to this embodiment, the urging members 140 are secured to the holding member 124, and therefore, urge predetermined portions of the weight members 122 in the axial direction of the output shaft 15 more certainly.

In the clutch device 10 according to this embodiment, the urging members 140 each include the urging portions 142 urging the weight members 122 in the axial direction of the output shaft 15, and the urging portions 142 are formed to be elastically deformable. According to this embodiment, excessive urging of the weight members 122 by the urging portions 142 is suppressed.

In the clutch device 10 according to this embodiment, one urging member 140 includes the urging portions 142 respectively at an end on one side in the circumferential direction S (on the side of the first circumferential direction S1) of the urging member 140 and an end on the other side in the circumferential direction S (on the side of the second circumferential direction S2) of the urging member 140. According to this embodiment, the urging portions 142 urge the weight members 122 in the axial direction of the output shaft 15.

In the clutch device 10 according to this embodiment, the weight members 122 each include the planar portions 122B urged by the urging portions 142. According to this embodiment, the urging force of the urging portions 142 is transferred to the weight members 122 more effectively.

In the clutch device 10 according to this embodiment, one urging member 140 urges a plurality of the weight members 122 in the axial direction of the output shaft 15. According to this embodiment, the centrifugal clutch mechanism 120 is simplified.

In the clutch device 10 according to this embodiment, the plurality of weight members 122 are arranged in the circumferential direction S, and the urging members 140 are each provided on the guide member 128 between adjacent ones of the weight members 122. According to this embodiment, the urging members 140 are located in a compact manner.

In the clutch device 10 according to this embodiment, the urging members 140 are each secured to the holding member 124 between adjacent ones of the weight members 122. According to this embodiment, the urging members 140 are located in a compact manner.

In the clutch device 10 according to this embodiment, the holding member 124 includes the engagement projections 125 located ahead of the springs 135 in the outward direction M1 of the radial direction M and engaged with the clutch housing 30, and the pressed surfaces 124AP pressed by the weight members 122 when the weight members 122 are at the outward M1 positions in the radial direction M. The engagement projections 125 and the pressed surfaces 124AP are located to be shifted from each other in the circumferential direction S. According to this embodiment, the engagement projections 125 are not provided with an excessive load, and therefore, destruction of the engagement projections 125 is suppressed.

In the clutch device 10 according to this embodiment, the weight members 22 each have the plurality of penetrating holes 122H formed therein, penetrating the weight member 22 in the axial direction of the output shaft 15. The springs 135 include the first springs 135A and the second springs 135B arranged in the circumferential direction S. The centrifugal clutch mechanism 120 includes the first spherical members 131 each partially projecting from the opening of the corresponding penetrating hole 122H and configured to be rollable. The first spherical members 131 may be located between the first spring 135A and the second spring 135B in the circumferential direction S. According to this embodiment, the first spring 135A and the second spring 135B urge the weight member 122 in the inward direction M2 of the radial direction M with a good balance.

In the clutch device 10 according to this embodiment, the urging members 140 urge the weight members 122 in the axial direction of the output shaft 15 and toward the holding member 124. According to this embodiment, the weight members 122 are constantly in contact with the holding member 124 by the urging members 140. Therefore, even though the engine or the like vibrates, the vibration of the weight members 122 in the axial direction of the output shaft 15 is suppressed more certainly.

### <Embodiment 2>

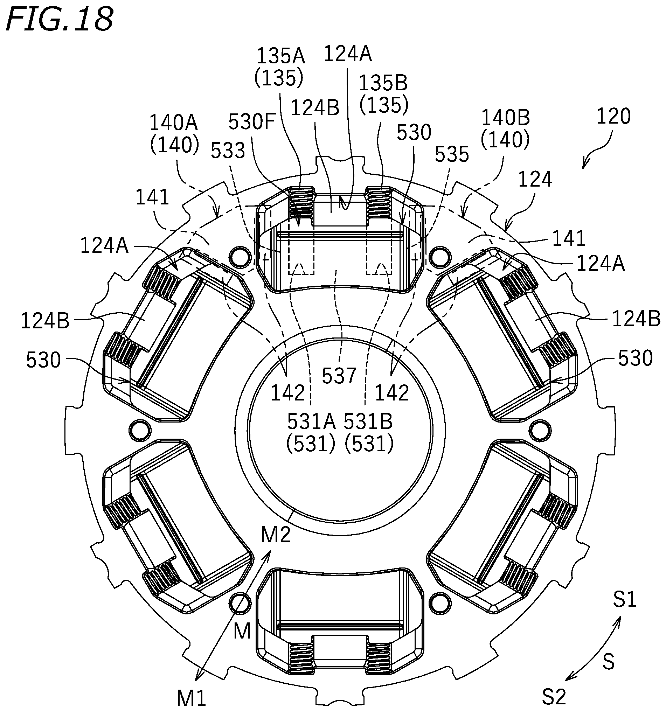

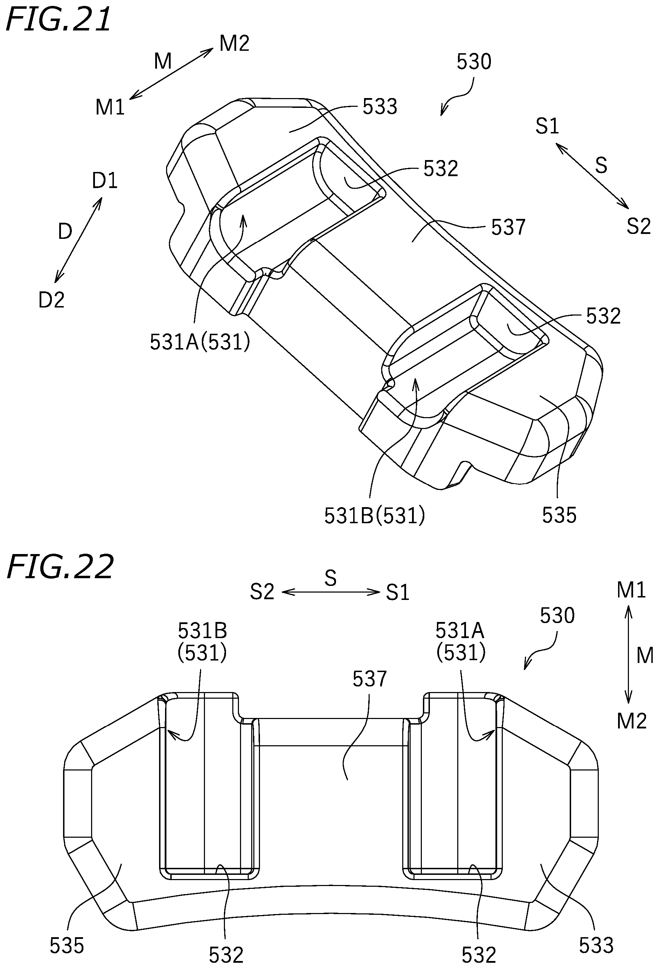

FIG. 18 is a plan view showing a portion of a centrifugal clutch mechanism 120 according to embodiment 2, showing a state where weight members 530 are located at inward M2 positions in the radial direction M. As shown in FIG. 18, the plurality of weight members 530 are arranged in the circumferential direction S. The weight members 530 are configured to be movable from the inward M2 positions to outward M1 positions in the radial direction by a centrifugal force caused by the rotation of the clutch housing 30. The weight members 530 are configured to be capable of pressing the pressure-contact member 126 in the second direction D2. In a state of not being provided with a centrifugal force, the weight members 530 are held at the inward M2 positions in the radial direction M by the springs 135. When being provided with a centrifugal force, the weight members 530 move in the outward direction M1 of the radial direction M against the urging force of the springs 135 to arrive at the outward M1 positions in the radial direction M. The weight members 530 are respectively housed in the housings 124A of the holding member 124. As shown in FIG. 21, each of the weight members 530 includes urging member holding portions 531, a first plane 533 provided ahead of the urging member holding portions 531 on one side in the circumferential direction S, a second plane 535 provided ahead of the urging member holding portions 531 on the other side in the circumferential direction S, and a weight-side inclining surface 530F (see FIG. 19 and FIG. 20) located opposite to the first plane 533 and the second plane 535 in the axial direction of the output shaft 15 (i.e., in the direction D).

The urging member holding portions 531 hold the springs 135. As shown in FIG. 21, the urging member holding portions 531 are recessed grooves recessed in the second direction D2 while inclining in the inward direction M2 from the side of the outward direction M1 of the radial direction M. The urging member holding portions 531 each include a holding wall 532 holding an end, on the side of the inward direction M2 of the radial direction M, of the spring 135. In this embodiment, the urging member holding portions 531 include a first urging member holding portion 531A holding the first spring 135A (see FIG. 18) and a second urging member holding portion 531B holding the second spring 135B.

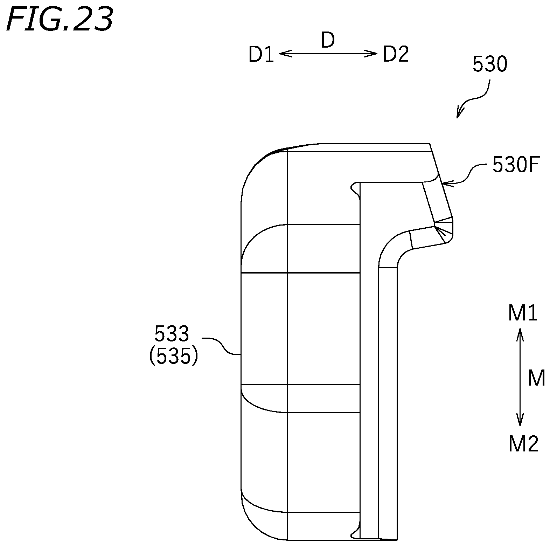

As shown in FIG. 21 and FIG. 22, the first plane 533 is provided ahead of the urging member holding portions 531 in the first circumferential direction S1. More specifically, the first plane 533 is provided ahead of the first urging member holding portion 531A in the first circumferential direction S1. The first plane 533 is provided side by side with the first urging member holding portion 531A in the circumferential direction S. The second plane 535 is provided ahead of the urging member holding portions 531 in the second circumferential direction S2. More specifically, the second plane 535 is provided ahead of the second urging member holding portion 531B in the second circumferential direction S2. The second plane 535 is provided side by side with the second urging member holding portion 531B in the circumferential direction S. As shown in FIG. 23, the first plane 533 and the second plane 535 are perpendicular to the axial direction of the output shaft 15 (i.e., in the direction D). The first plane 533 and the second plane 535 are formed to be flush with each other. The first plane 533 and the second plane 535 are provided to be contactable with the contact surface 124B of the holding member 124. The first plane 533 and the second plane 535 are provided to be slidable against the holding member 124. More specifically, the first plane 533 and the second plane 535 are provided to be slidable against the contact surface 124B.

As shown in FIG. 21, the weight member 530 includes a third plane 537. The third plane 537 is located between the first plane 533 and the second plane 535 in the circumferential direction S. The third plane 537 is located between the first urging member holding portion 531A and the second urging member holding portion 531B in the circumferential direction S. The third plane 537 may be provided to be slidable against the holding member 124. The third plane 537 may be formed to be flush with the first plane 533 and the second plane 535.

The weight-side inclining surface 530F is provided to be contactable with the pressure-contact member 126. As shown in FIG. 23, the weight-side inclining surface 530F is inclined with respect to the axial direction of the output shaft 15 (i.e., with respect to the direction D). The weight-side inclining surface 530F is inclined in the first direction D1 while inclining in the outward direction M1 from the side of the inward direction M2 of the radial direction M. The weight-side inclining surface 530F is configured to be slidable against the gradient portion 126A (see FIG. 13) of the pressure contact portion 126.

As shown in FIG. 18, the urging members 140 urge the weight members 530 in the axial direction of the output shaft 15 (i.e., in the direction D) and toward the contact surfaces 124B. The urging portions 142 of the urging members 140 contact the weight members 530. In a state where the weight members 530 are located at least at the inward M2 positions in the radial direction M, as seen in the axial direction of the output shaft 15, the secured portion 141 of each of urging members 140A is located ahead of the first plane 533 on a side in the circumferential direction S (on the side of the first circumferential direction S1), and one of the urging portions 142 of the urging member 140A overlaps at least a portion of the first plane 533. In a state where the weight members 530 are located at least at the inward M2 positions in the radial direction M, as seen in the axial direction of the output shaft 15, the secured portion 141 of each of urging members 140B is located ahead of the second plane 535 on a side in the circumferential direction S (on the side of the second circumferential direction S2), and one of the urging portions 142 of the urging member 140B overlaps at least a portion of the second plane 535. It may be configured such that in at least a state during the movement of the weight members 530 in the outward direction from the side of the inward direction M2 of the radial direction M, and in a state where the weight members 530 are located at the outward M1 positions in the radial direction M, as seen in the axial direction of the output shaft 15, one of the urging portions 142 of the urging member 140A overlaps at least a portion of the first plane 533, and one of the urging portions 142 of the urging member 140B overlaps at least a portion of the second plane 535.

In the centrifugal clutch mechanism 120 having such a configuration, as shown in FIG. 18, when the weight members 530 are not provided with a centrifugal force, the weight members 530 are held at the inward M2 positions in the radial direction M, and thus the input-side rotating plates 20 and the output-side rotating plates 22 are released from the contact pressure force. By contrast, when the weight members 530 are provided with a centrifugal force, the weight members 530 move from the inward M2 positions to the outward M1 positions in the radial direction M. While the weight members 530 move in the radial direction M, the weight-side inclining surfaces 530F of the weight members 530 and the gradient portions 126A of the pressure-contact member 126 slide against each other, and furthermore, the first planes 533 and the second planes 535 of the weight members 530 slide against the contact surfaces 124B of the holding member 124. At this point, the pressing surface 126C (see FIG. 13) of the pressure-contact member 126 presses the input-side rotating plates 20 and the output-side rotating plates 22 via the flange 68 of the second clutch center 51 into a contact pressure state, thus to provide a state where the transfer of the rotation driving force of the input shaft to the output shaft 15 is allowed. At the same time, the holding member 124 moves in the first direction D1, and the pressing portion 124C (see FIG. 13) of the holding member 124 presses the assisting clutch plate 150.

### <Embodiment 3>

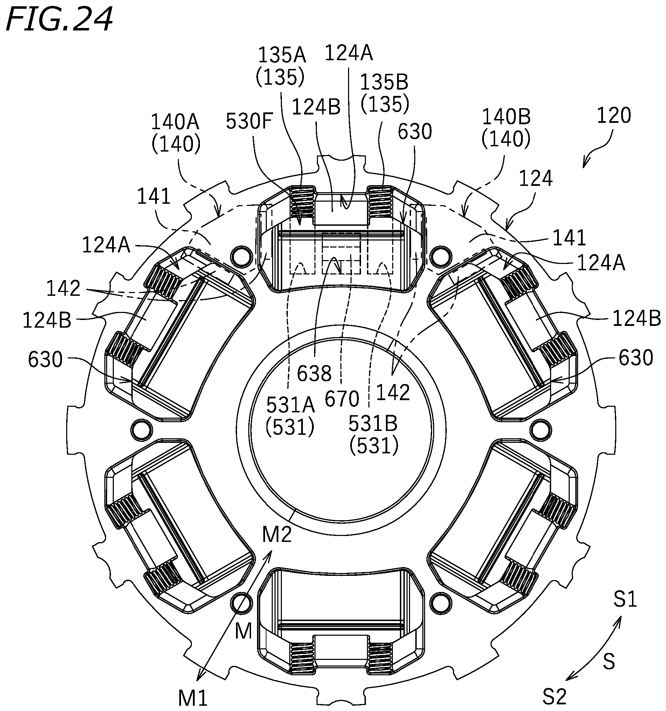

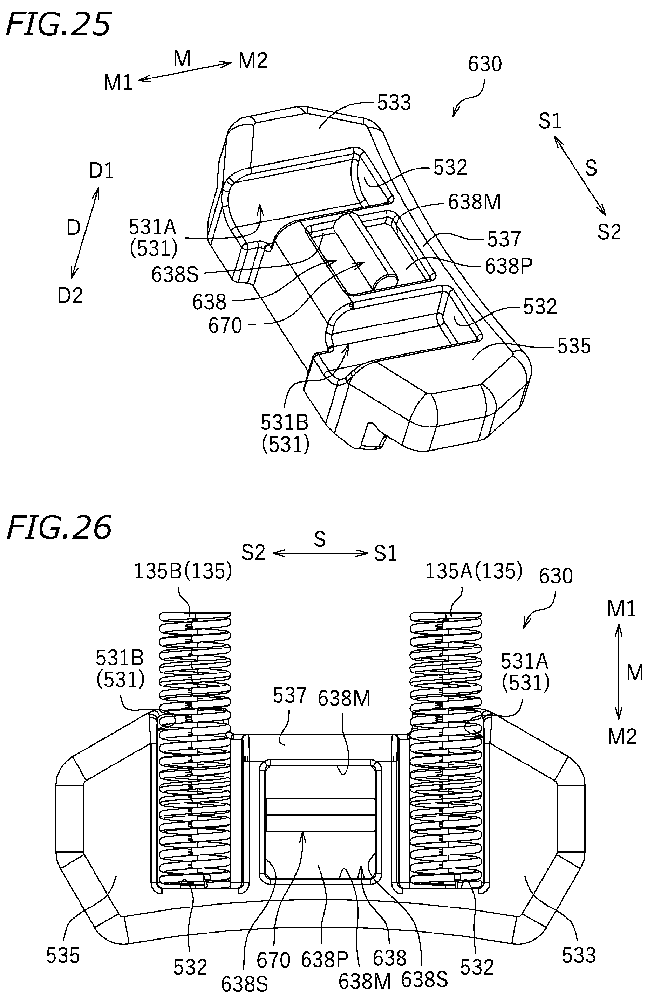

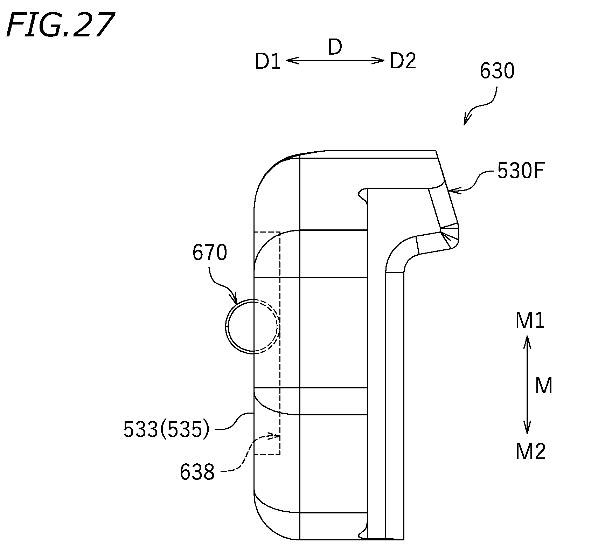

FIG. 24 is a plan view showing a portion of a centrifugal clutch mechanism 120 according to embodiment 3, showing a state where weight members 630 are located at inward M2 positions in the radial direction M. As shown in FIG. 24, the plurality of weight members 630 are arranged in the circumferential direction S. As shown in FIG. 25, the weight members 630 each include a guide portion 638 housing a portion of a cylindrical member 670. The guide portion 638 is formed in a surface facing the holding member 124 (in this embodiment, in the third plane 537). The guide portion 638 holds the cylindrical member 670 such that a portion of the cylindrical member 670 projects toward the holding member 124 from a surface, of the weight member 630, that faces the holding member 124 (in this embodiment, the surface is the third plane 537) (i.e., the portion of the cylindrical member 670 projects in the first direction D1) (see FIG. 27). The guide portion 638 guides a movement of the cylindrical member 670 in the radial direction M. The guide portion 638 is located between the first urging member holding portion 531A and the second urging member holding portion 531B in the circumferential direction S. As shown in FIG. 26, the guide portion 638 is formed to be rectangular as seen in a plan view. The guide portion 638 includes first restriction portions 638S restricting the cylindrical member 670 from moving in the circumferential direction S and second restriction portions 638M restricting the cylindrical member 670 from moving in the radial direction M by a predetermined distance or longer. The first restriction portions 638S are respectively provided on the side of the first circumferential direction S1 and the side of the second circumferential direction S2 of the circumferential direction S. The second restriction portions 638M are respectively provided on the side of the outward direction M1 and on the side of the inward direction M2 of the radial direction M. The guide portion 638 includes a housing recessed groove 638P recessed toward the weight member 630 from the holding member 124 in the axial direction of the output shaft 15 (i.e., in the direction D) (i.e., the housing recessed groove 638P is recessed in the second direction D2) and housing a portion of the cylindrical member 670. The housing recessed groove 638P is defined by the first restriction portions 638S and the second restriction portions 638M.

As shown in FIG. 24, the cylindrical members 670 are each provided between the weight member 630 and the holding member 124 in the axial direction of the output shaft 15 (i.e., in the direction D). The cylindrical member 670 is located to extend in a direction crossing the radial direction M (in this embodiment, in a direction perpendicular to the radial direction M and the direction D). The cylindrical member 670 rolls against the weight member 630 and the holding member 124. A portion of the cylindrical member 670 is housed in the housing portion 124A of the holding member 124, and another portion of the cylindrical member 670 is housed in the guide portion 638 of the weight member 630. The cylindrical member 670 rolls against the contact surface 124B of the housing portion 124A and the guide portion 638. As shown in FIG. 26, the cylindrical member 670 is located between the first spring 135A and the second spring 135B in the circumferential direction S.

As shown in FIG. 24, the urging members 140 urge the weight members 630 in the axial direction of the output shaft 15 (i.e., in the direction D) and toward the contact surfaces 124B. The urging portions 142 of the urging members 140 each contact the corresponding weight member 630. In a state where the weight members 630 are located at least at the inward M2 positions in the radial direction M, as seen in the axial direction of the output shaft 15, one of the urging portions 142 of each urging member 140A is located ahead of the guide portion 638 on a side in the circumferential direction S (on the side of the first circumferential direction S1), and one of the urging portions 142 of each urging member 140B is located ahead of the guide portion 638 on a side in the circumferential direction S (on the side of the second circumferential direction S2). In at least a state during the movement of the weight members 630 in the outward direction M1 from the side of the inward direction M2 of the radial direction M, and in a state where the weight members 630 are located at the outward M1 positions in the radial direction M, as seen in the axial direction of the output shaft 15, one of the urging portions 142 of the urging member 140A may be located ahead of the guide portion 638 on a side in the circumferential direction S (on the side of the first circumferential direction S1), and one of the urging portions 142 of the urging member 140B may be located ahead of the guide portion 638 at a side in the circumferential direction S (on the side of the second circumferential direction S2).

In the centrifugal clutch mechanism 120 having such a configuration, as shown in FIG. 24, when the weight members 630 are not provided with a centrifugal force, the weight members 630 are held at the inward M2 positions in the radial direction M, and thus the input-side rotating plates 20 and the output-side rotating plates 22 are released from the contact pressure force. By contrast, when the weight members 630 are provided with a centrifugal force, the weight members 630 move from the inward M2 positions to the outward M1 positions in the radial direction M. While the weight members 630 move in the radial direction M, the cylindrical members 670 are guided by the guide portions 638 and the housing portions 124A to roll against the weight members 630 and the holding member 124. At this point, the first planes 533 and the second planes 535 of the weight members 630 do not slide against the contact surfaces 124B of the holding member 124.

### <Embodiment 4>

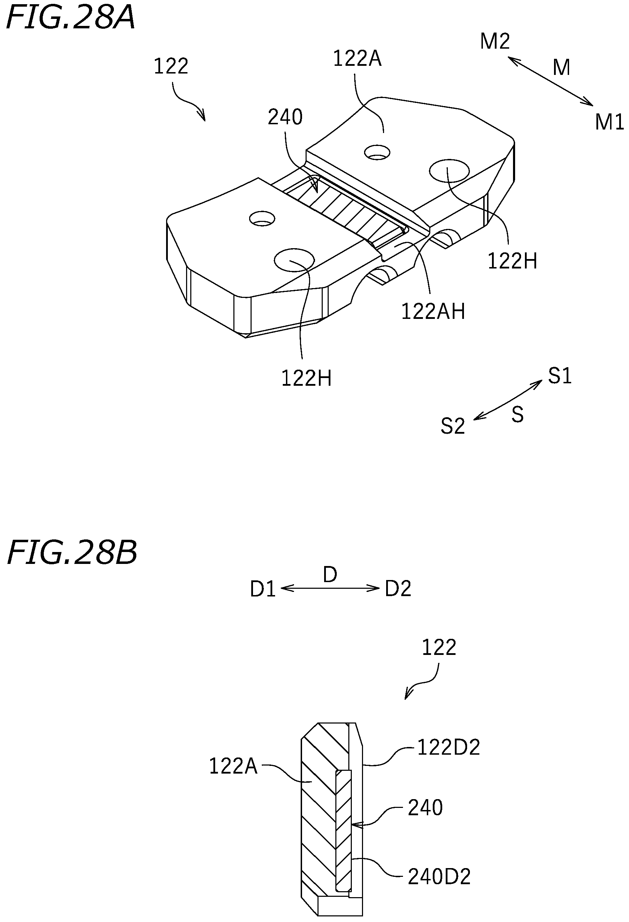

As shown in FIG. 28A and FIG. 28B, an urging member 240 according to embodiment 4 is provided in the weight member 122. The urging member 240 is provided between the guide member 128 and the weight member 122. The urging member 240 is provided between the guide portion 129A (see FIG. 14) of the guide member 128 and the groove 122AH of the weight member 122. The urging member 240 is provided ahead of the weight member 122 in the second direction D2. The urging member 240 is provided at a center of the weight member 122 in the circumferential direction S. The urging member 240 is attached to the groove 122AH of the body 122A of the weight member 122. The urging member 240 is located between the pair of penetrating holes 122H in the circumferential direction S. At least a portion of the urging member 240 is located ahead of the first spherical members 131 and the second spherical members 132 (i.e., the penetrating holes 122H) in the inward direction M2 of the radial direction M. The urging member 240 is formed of an elastic body. The urging member 240 is formed of, for example, rubber or is, for example, a leaf spring. The urging member 240 extends in the radial direction M. The urging member 240 has a cuboid shape. A length of the urging member 240 in the radial direction M is longer than a length thereof in the circumferential direction S. The urging member 240 contacts the guide portion 129A (see FIG. 14) of the guide member 128. The urging member 240 contacts the guide member 128 to urge the weight member 122 in the first direction D1. The urging member 240 urges the weight member 122 in the axial direction of the output shaft 15 and toward the holding member 124. In a state before the guide member 128 is attached to the holding member 124, a surface 240D2, on the side of the second direction D2, of the urging member 240 projects in the second direction D2 to be ahead of a surface 122D2, on the side of the second direction D2, of the weight member 122. In a state where the guide member 128 is attached to the holding member 124, the urging member 240 is compressed in the first direction D1. At this point, the surface 240D2, on the side of the second direction D2, of the urging member 240 may be flush with the surface 122D2, on the side of the second direction D2, of the weight member 122 or may project in the second direction D2 to be ahead of the surface 122D2, on the side of the second direction D2, of the weight member 122 (in either case, the urging member 240 urges the weight member 122 in the axial direction of the output shaft 15 and toward the holding member 124).

In the clutch device 10 according to this embodiment, the urging member 240 is formed of an elastic body. According to this embodiment, excessive urging of the weight member 122 by the urging member 240 is suppressed.

In the clutch device 10 according to this embodiment, the urging member 240 is provided in the weight member 122. According to this embodiment, the urging member 240 urges a predetermined portion of the weight member 122 in the axial direction of the output shaft 15 more certainly.

In the clutch device 10 according to this embodiment, the urging member 240 is provided at a center of the weight member 122 in the circumferential direction S. According to this embodiment, the urging member 240 urges the weight member 122 in the axial direction of the output shaft 15 with a good balance.

In the clutch device 10 according to this embodiment, the urging member 240 extends in the radial direction M. According to this embodiment, the urging member 240 urges the weight member 122 in the axial direction of the output shaft 15 with a better balance.

In the clutch device 10 according to this embodiment, at least a portion of the urging member 240 is located ahead of the first spherical members 131 and the second spherical members 132 in the inward direction M2 of the radial direction M. According to this embodiment, the urging member 240 urges the weight member 122 in the axial direction of the output shaft 15 with a better balance.

In this embodiment, the urging member 240 is provided at the surface, on the side of the second direction D2, of the weight member 122. The present invention is not limited to this. For example, the urging member 240 may be provided at a surface, on the side of the first direction D1, of the weight member 122 to urge the weight member 122 in the axial direction of the output shaft 15 and toward the guide member 128. With this configuration, the weight member 122 is constantly in contact with the guide member 128 by the urging member 240. Therefore, even though the engine or the like vibrates, the vibration of the weight member 122 in the axial direction of the output shaft 15 is suppressed more certainly.

### <Embodiment 5>

As shown in FIG. 29A and FIG. 29B, urging members 440 according to embodiment 5 are provided on the guide member 128. The urging members 440 are provided ahead of the guide member 128 in the first direction D1. The urging members 440 are respectively provided on guide portions 129A of the guide member 128. The urging members 440 are each provided between a pair of the first spherical members 131 in the circumferential direction S. The urging members 440 are each formed of an elastic body. The urging members 440 are formed of, for example, rubber. The urging members 440 extend in the radial direction M. The urging members 440 are each flat plate-like. The urging members 440 respectively contact the weight members 122. The urging members 440 are each fit into the groove 122AH of the body 122A of the weight member 122 to contact the body 122A. The urging members 440 contact the weight members 122 to urge the weight members 122 in the first direction D1. The urging members 440 urge the weight members 122 in the axial direction of the output shaft 15 and toward the holding member 124.

In the clutch device 10 according to this embodiment, the centrifugal clutch mechanism 120 includes the guide member 128 located between the holding member 124 and the pressure-contact member 126 in the axial direction of the output shaft 15 and guiding the movement of the weight members 122 in the radial direction M, and the urging members 440 are provided on the guide member 128. According to this embodiment, the urging members 440 urge predetermined portions of the weight members 122 in the axial direction of the output shaft 15 more certainly.

In the clutch device 10 according to this embodiment, the weight members 122 each have the plurality of penetrating holes 122H penetrating the weight member 122 in the axial direction of the output shaft 15. The centrifugal clutch mechanism 120 includes the pair of first spherical members 131 partially projecting from the openings of the penetrating holes 122H and configured to be rollable. The urging members 440 are each located between the pair of spherical members 131 in the circumferential direction S and extend in the radial direction M. According to this embodiment, the urging members 440 urge the weight members 122 in the axial direction of the output shaft 15 with a better balance.

Preferred embodiments of the present invention are described above. The above-described embodiments are merely illustrative examples, and the present invention may be carried out in any of various other embodiments.

In each of the above-described embodiments, the weight members 122 each include the planar portions 122B respectively located at the two ends of the body 122A in the circumferential direction S. The present invention is not limited to this. The weight members 122 may each include curved portions instead of the planar portions.

In each of the above-described embodiments, the urging portions 142 of the urging members 140 urge the planar portions 122B of the weight members 122. The urging portions 142 may urge the body 122A instead of the planar portions 122B.

In the above-described embodiments, the pressure-contact member 126 is formed separately from the clutch center 40. For example, the pressure-contact member 126 may be formed integrally with the second clutch center 51. For example, the pressure-contact member 126 may be formed integrally with the flange 68 of the second clutch center 51.

In the above-described embodiments, the urging members 140, 240 and 440 are provided between the guide member 128 and the weight members 122. The present invention is not limited to this. For example, the urging members 140, 240 and 440 may be provided between the holding member 124 and the weight members 122. In this case, the urging members 140, 240 and 440 urge the weight members 122 in the axial direction of the output shaft 15 and toward the pressure-contact member 126. The urging members 140, 240 and 440 push the first spherical members 131 of the centrifugal clutch mechanism 120 to the pressure-contact member 126. In this case, the pressure-contact member 126 is an example of contact member.

### Reference Signs List

- 10: clutch device
- 15: output shaft
- 20: input-side rotating plate
- 22: output-side rotating plate
- 30: clutch housing
- 40: clutch center
- 70: pressure member
- 120: centrifugal clutch mechanism
- 122: weight member
- 122B: planar portion
- 122H: penetrating hole
- 124: holding member
- 125: engagement projection
- 126: pressure-contact member
- 128: guide member
- 131: first spherical member
- 132: second spherical member
- 135: spring (elastic member)
- 140: urging member
- 141: secured portion
- 142: urging portion

## Claims

1. A clutch device allowing or blocking transfer of a rotation driving force of an input shaft to an output shaft, the clutch device comprising:
a clutch center housed in a clutch housing holding a plurality of input-side rotating plates rotationally drivable by rotational driving of the input shaft, the clutch center being rotationally drivable together with the output shaft;
a pressure member movable toward, or away from, the clutch center, the pressure member capable of pressing the input-side rotating plates and the output-side rotating plates alternately arranged with the input-side rotating plates; and
a centrifugal clutch mechanism including a plurality of weight members configured to be movable from radially inward positions to radially outward positions by a centrifugal force caused by the rotation of the clutch housing; when the weight members are at the radially outward positions, the centrifugal clutch mechanism putting the input-side rotating plates and the output-side rotating plates into pressure contact with each other to provide a state where the transfer of the rotation driving force of the input shaft to the output shaft is allowed; and when the weight members are at the radially inward positions, the centrifugal clutch mechanism releasing the input-side rotating plates and the output-side rotating plates from a contact pressure force to provide a state where the transfer of the rotation driving force of the input shaft to the output shaft is blockable,
wherein the centrifugal clutch mechanism includes:
a holding member holding the weight members such that the weight members are movable between the radially inward positions and the radially outward positions,
an elastic member urging the weight members in a radially inward direction,
a pressure-contact member movable in an axial direction of the output shaft, by the movement of the weight members from the radially inward positions to the radially output positions, to put the input-side rotating plates and the output-side rotating plates into pressure contact with each other, and
an urging member located between the holding member and the pressure-contact member in the axial direction of the output shaft, the urging member urging the weight member held by the holding member in the axial direction of the output shaft and permitting the weight member to move in a radial direction.

2. The clutch device according to claim 1, wherein the urging member is formed of a plate-like member.

3. The clutch device according to claim 2, wherein:
the centrifugal clutch mechanism includes a guide member located between the holding member and the pressure-contact member in the axial direction of the output shaft, the guide member guiding the movement of the weight members in the radial direction, and
the urging member is provided on the guide member.

4. The clutch device according to claim 3, wherein the urging member is secured to the holding member.

5. The clutch device according to claim 2, wherein:
the urging member includes an urging portion urging the weight member in the axial direction of the output shaft, and
the urging portion is formed to be elastically deformable.

6. The clutch device according to claim 5, wherein the urging member includes the urging portion provided at each of an end, on one side of a circumferential direction, of the urging member and an end, on the other side of the circumferential direction, of the urging member.

7. The clutch device according to claim 5 or 6, wherein the weight members each include a planar portion urged by the urging portion.

8. The clutch device according to claim 3 or 5, wherein the urging member urges a plurality of the weight members in the axial direction of the output shaft.

9. The clutch device according to claim 3, wherein:
the plurality of weight members are arranged in a circumferential direction, and
the urging member is provided on the guide member between adjacent ones of the weight members.

10. The clutch device according to claim 9, wherein the urging member is secured to the holding member between adjacent ones of the weight members.

11. The clutch device according to claim 2, wherein:
the centrifugal clutch mechanism includes a guide member located between the holding member and the pressure-contact member in the axial direction of the output shaft, the guide member guiding the movement of the weight members in the radial direction, and
the urging member is provided between the guide member and the weight members.

12. The clutch device according to claim 11, wherein the guide member is secured to the holding member.

13. The clutch device according to claim 1 or 2, wherein the urging member is formed of an elastic body.

14. The clutch device according to claim 13, wherein the urging member is provided in the weight member.

15. The clutch device according to claim 14, wherein the urging member is provided at a center of the weight member.

16. The clutch device according to claim 15, wherein the urging member extends in the radial direction.

17. The clutch device according to claim 14, wherein:
the weight members each have a penetrating hole penetrating the weight member in the axial direction of the output shaft,
the centrifugal clutch mechanism includes a spherical member partially projecting from an opening of the penetrating hole and configured to be rollable, and
at least a portion of the urging member is located ahead of the spherical member in the radially inward direction.

18. The clutch device according to claim 1, wherein:
the centrifugal clutch mechanism includes a guide member located between the holding member and the pressure-contact member in the axial direction of the output shaft, the guide member guiding the movement of the weight members in the radial direction, and
the urging member is provided on the guide member.

19. The clutch device according to claim 18, wherein the urging member is secured to the holding member.

20. The clutch device according to claim 18, wherein:
the weight members each have a plurality of penetrating holes penetrating the weight member in the axial direction of the output shaft,
the centrifugal clutch mechanism includes a pair of spherical members partially projecting from openings of the penetrating holes and configured to be rollable, and
the urging member is located between the pair of spherical members in a circumferential direction and extending in the radial direction.

21. The clutch device according to claim 1, wherein:
the holding member includes:
an engagement projection located ahead of the elastic member in a radially outward direction and engaged with the clutch housing, and
a pressing surface pressed by the weight members when the weight members are at the radially outward positions, and
the engagement projection and the pressing surface are located to be shifted from each other in a circumferential direction.

22. The clutch device according to claim 1, wherein:
the weight members each have a plurality of penetrating holes penetrating the weight member in the axial direction of the output shaft,
the elastic member includes a first elastic member and a second elastic member arranged in a circumferential direction,
the centrifugal clutch mechanism includes spherical members partially projecting from openings of the penetrating holes and configured to be rollable, and
the spherical members are located between the first elastic member and the second elastic member in the circumferential direction.

23. The clutch device according to claim 1, wherein the urging member urges the weight member in the axial direction of the output shaft and toward the holding member.

24. The clutch device according to claim 1, wherein:
the holding member includes a contact surface facing the weight member in the axial direction of the output shaft and contacted by the weight member, and
the urging member urges the weight member in the axial direction of the output shaft and toward the contact surface.

25. The clutch device according to claim 24, wherein:
the weight member includes a plane contactable with the contact surface, and
in a state where the weight member is located at least at the radially inward position, as seen in the axial direction of the output shaft, at least a portion of the urging member is located on one side, in a circumferential direction, of the plane.

26. The clutch device according to claim 25, wherein in a state where the weight member is located at least at the radially inward position, as seen in the axial direction of the output shaft, at least a portion of each of a plurality of the urging members is located on each of two sides, in the circumferential direction, of the plane.

27. The clutch device according to claim 24, wherein:
the weight member includes a plane contactable with the contact surface,
the urging member includes an urging portion contacting the weight member, and
in a state where the weight member is located at least at the radially inward position, as seen in the axial direction of the output shaft, the urging portion overlaps at least a portion of the plane.

28. The clutch device according to claim 24, wherein:
the centrifugal clutch mechanism includes a cylindrical member provided between the weight member and the holding member in the axial direction of the output shaft, extending in a direction crossing the radial direction, and rollable against the weight member and the holding member,
the weight member includes:
a guide portion formed on a surface facing the holding member, the guide portion holding the cylindrical member such that the cylindrical member partially project toward the holding member from a surface, of the weight member, facing the holding member, and guiding the movement of the cylindrical member in the radial direction,
the urging member includes an urging portion contactable with the weight member, and
in a state where the weight member is located at least at the radially inward position, as seen in the axial direction of the output shaft, the urging portion is located on one side, in a circumferential direction, of the guide portion.

29. The clutch device according to claim 28, wherein in a state where the weight member is located at least at the radially inward position, as seen in the axial direction of the output shaft, a plurality of the urging portions are respectively located on two sides, in the circumferential direction, of the guide portion.

30. The clutch device according to claim 1, wherein the elastic member is provided on the holding member.

31. The clutch device according to claim 1, wherein:
the holding member includes a contact surface contactable with the weight member, and
the urging member urges the weight member toward the contact surface.

32. A clutch device allowing or blocking transfer of a rotation driving force of an input shaft to an output shaft, the clutch device comprising:
a clutch center housed in a clutch housing holding a plurality of input-side rotating plates rotatably drivable by rotational driving of the input shaft, the clutch center being rotationally drivable together with the output shaft;
a pressure member movable toward, or away from, the clutch center, the pressure member capable of pressing the input-side rotating plates and the output-side rotating plates alternately arranged with the input-side rotating plates; and
a centrifugal clutch mechanism including a plurality of weight members configured to be movable from radially inward positions to radially outward positions by a centrifugal force caused by the rotation of the clutch housing; when the weight members are at the radially outward positions, the centrifugal clutch mechanism putting the input-side rotating plates and the output-side rotating plates into pressure contact with each other to provide a state where the transfer of the rotation driving force of the input shaft to the output shaft is allowed; and when the weight members are at the radially inward positions, the centrifugal clutch mechanism releasing the input-side rotating plates and the output-side rotating plates from a contact pressure force to provide a state where the transfer of the rotation driving force of the input shaft to the output shaft is blockable,
wherein the centrifugal clutch mechanism includes:
a contact member contacted by the weight members between the radially inward positions and the radially outward positions,
an elastic member urging the weight members in a radially inward direction,
a pressure-contact member movable in an axial direction of the output shaft, by the movement of the weight members from the radially inward positions to the radially output positions, to put the input-side rotating plates and the output-side rotating plates into pressure contact with each other, and
an urging member urging the weight member toward the contact member in the axial direction of the output shaft and permitting the weight member to move in the radial direction.
